# EUROPÄISCHE PATENTSCHRIFT

(11) **EP 4 687 357 B1**
(45) Veröffentlichungstag und Bekanntmachung des Hinweises auf die Patenterteilung: **07.10.2026**
(21) Anmeldenummer: 24192400.0
(22) Anmeldetag: 01.08.2024
(51) Int. Cl.: H04W 4/06, H04W 4/90, H04B 7/0456, G08B 23/00, G08B 21/10, G08B 27/00

(54) **TECHNIKEN ZUM WARNEN VOR GEFAHRENSITUATIONEN**
TECHNIQUES FOR WARNING ABOUT DANGEROUS SITUATIONS
TECHNIQUES D'AVERTISSEMENT DE SITUATIONS DANGEREUSES

(43) Veröffentlichungstag der Anmeldung: 04.02.2026
(73) Patentinhaber: Deutsche Telekom AG, 53113 Bonn (DE); Technische Universität München, 80333 München (DE)
(72) Erfinder: GEITZ, Marc, Hagen (DE); BOCHE, Holger, Berlin (DE); DEPPE, Christian, München (DE); ROSENBERGER, Johannes, München (DE)
(74) Vertreter: karo IP

(56) Entgegenhaltungen:
- US-A1- 2015 379 863

## Beschreibung

Die Erfindung betrifft Techniken zum Warnen vor Gefahrensituationen. Insbesondere betrifft die Erfindung hierzu ein Verfahren, einen Sensor, ein Nutzerendgerät, ein Warngerät und ein entsprechend eingerichtetes Kommunikationssystem.

Katastrophenwarnsysteme sind essenziell, um Menschen schnell vor einer Vielzahl von Gefahren warnen zu können. Im Idealfall können die Warnsysteme dazu beitragen eine große Anzahl von Menschenleben zu retten.

Insbesondere Naturkatastrophen haben in der näheren Vergangenheit viel Schaden angerichtet, so beispielsweise die Erdbebenkatastrophe in der Türkei und Syrien; die Flutkatastrophe an der Ahr oder an der Elbe in Deutschland, oder der Tsunami in Thailand.

Es gibt allerdings auch von Menschen erzeugte Katastrophen, wie zum Beispiel der Krieg in der Ukraine, das Werfen einer chemischen Bombe, die zu vielen Toten in der Bevölkerung führen, wobei eine rechtzeitige Warnung vielleicht zumindest teilweise Leben retten könnte.

Zumindest einige der Katastrophen bzw., dass sich diese Katastrophen andeuten, kann von Sensoren detektiert werden. So gibt es Sensoren, die seismische Aktivitäten aufzeichnen, Wasserstände in Flüssen messen, Wasserstände und Wellenbewegungen in den Meeren und Küsten aufzeichnen, Stürme und Winde messen, chemische Bestandteile in der Luft detektieren, oder radioaktive Strahlung messen.

In vielen "kritischen" Regionen der Erde werden diese Sensoren bereits eingesetzt. Zusätzlich werden diese Sensoren durch ein Netzwerk weltweiter Wetter- und Meeresbeobachtungsstationen - auch unter Einsatz von tausenden Flugzeugen und Messballons - unterstützt, die entsprechende Messdaten aufnehmen.

Zusätzlich existieren schon Überwachungssysteme im Weltraum, wie Satelliten, die die Erdoberfläche regelmäßig hochauflösend fotografieren und Veränderungen feststellen können, Satelliten, die das weltweite Wettergeschehen aufzeichnen können, oder Satelliten, die die Temperatur, den Wasserstand und die Luftfeuchtigkeit in einem bestimmten Gebiet messen können.

Im Stand der Technik sind diese Sensoren typischerweise mit Überwachungszentren verbunden, welche jeweils für die Überwachung einer Region und den Betrieb der Sensoren verantwortlich sind. Dies sind beispielsweise Katastrophenschutzzentren, das Tsunami Frühwarnsystem, oder die Satellitenbetreiber. Die Überwachungszentren können die Analyse einer Gefahrenquelle basierend auf den SensorDaten übernehmen und können in der Folge implementierte Warnsysteme nutzen, um Alarme verschiedenster Art (Sirenen, Rundfunk, Broadcast-Signale, App-Warnungen) zu versenden, um die Bevölkerung zu warnen.

Die etablierten Systeme sind in der Regel regional bzw. maximal national integriert und damit in ihrer Wirkung beschränkt. Ein Grund hierfür sind unter anderem Kompatibilitätsprobleme. Die etablierten Systeme bedürfen gegebenenfalls einer Einwirkung von Fachpersonal bevor ein Alarm an die Bevölkerung versendet wird. Insbesondere aktuelle und zukünftige Mobilfunkstandards, wie etwa 5G oder 6G, können ein einheitliches Design eines Frühwarnsystems ermöglichen, das vollautomatisiert und weltweit standardisiert die Signalisierung der Sensoren, die Analyse der Ergebnisse und die Warnung der Bevölkerung übernimmt.

Beispielsweise ist aus US 2015/379863 A1 ein Verfahren zum Warnen vor Gefahrensituationen in einem Gebiet mittels eines Kommunikationssystems bekannt. Dabei messen Sensoren Umgebungsparameter in dem Gebiet und versenden entsprechend kodierte Warnnachrichten.

Im Rahmen der nachstehenden Erfindung sind folgende Begriffe als technische Synonyme zu betrachten. Die Sensoren senden Warnungen. Die Sensoren senden Warnsignale. Die Sensoren senden Nachrichten. Die Sensoren senden Post-Shannon-Identifikations-Nachrichten. In jedem dieser Fälle werden von diesen Sensoren die erfindungsgemäßen Daten übertragen. Da es sich bei den nachfolgend beschriebenen Sensoren um Alarmsensoren handelt, sind die Nachrichten die diese Sensoren versenden Warnsignale oder Messsignale, die sich als Warnsignale erweisen können. Falls es sich um andere Nachrichtentypen handeln sollte, wird dies explizit beschrieben. Im Folgenden werden die Sensoren die Warnungen senden auch als Sender bezeichnet. Diese Sensoren können auch Empfänger sein, wenn sie die Nachrichten eines anderen Sensors weiterleiten. Letztlich sollen die Warnungen von Endgeräten eines Nutzers und/oder von Warngeräten als Empfänger empfangen werden, damit diese in der Lage sind vor Gefahren zu warnen.

Herkömmliche Systeme haben oft einzelne Systemkomponenten bei deren Ausfall die gesamte Weiterleitungskette betroffen sein kann, sodass überhaupt keine Alarmnachricht an den Nutzer abgesendet wird. Herkömmliche Systeme weisen zudem eine hohe Latenz auf, sodass Nachrichten nur verzögert ankommen. Zudem benötigen heutige Alarmsysteme zum Zeitpunkt der Gefahrenmeldung ein hohes Datenvolumen.

Aus all diesen Gründen ist bei den herkömmlichen Systemen nicht sichergestellt, dass eine Warnung überhaupt und/oder rechtzeitig bei den Nutzern ankommt.

Da ist es die Aufgabe der Erfindung, Techniken bereitzustellen, die die Nachteile des Standes der Technik zumindest teilweise überwinden.

Erfindungsgemäß ist ein Verfahren zum Warnen vor Gefahrensituationen in einem Gebiet mittels eines Kommunikationssystems angegeben, umfassend die folgenden Schritte:
- Bereitstellen einer Mehrzahl von Sensoren in dem Gebiet;
   ∘ hierzu können beispielsweise Sensoren verwendet werden, die Regenmengen, Wasserpegel, Chemikalien der Luft oder andere Umgebungsparameter messen, die geeignet sind eine Gefahrensituation zu charakterisieren; prinzipiell kann ein einziger Sensor hierfür ausreichen, allerdings wird durch eine Mehrzahl von Sensoren die räumliche Auflösung verbessert als auch die Redundanz erhöht;
   • Messen von einem Umgebungsparameter durch die Mehrzahl an Sensoren in dem Gebiet, wobei der Umgebungsparameter geeignet ist eine Gefahrensituation zu charakterisieren;
      ∘ die Sensoren sind insbesondere IoT-Devices, die ihre Stromversorgung mittels eines Akkus und/oder beispielsweise über ein Ihnen zugeordnetes Solarmodul beziehen. Das Solarmodul kann insbesondere in die Sensoren integriert sein. Die Sensoren können die Messungen der Umgebungsparameter in einer festlegbaren vorgegebenen Frequenz durchführen;
   • Absenden von Warnnachrichten durch die Sensoren, wobei die Warnnachrichten als Post-Shannon Nachrichten ausgebildet sind, die in einem zu übertragenden Identifizierungscode kodiert sind, wobei der Identifizierungscode charakteristische Kennzeichnungsmerkmale der Nachricht aufweist, die es einem Empfänger ermöglichen, anhand lokal vorliegender Daten zu prüfen, ob ihm die vollständige Nachricht bereits vorliegt, sodass der Empfänger die Nachricht durch Identifikation als empfangen erkennen kann.
      ∘ Die Warnnachricht kann insbesondere als Broadcast abgesendet werden, sodass sie schnell und effizient alle möglichen Geräte in der Umgebung erreicht, die die Nachricht verarbeiten und/oder weiterleiten können. Für die Broadcast-Nachricht kann insbesondere ein Sidelink des 5G oder 6G Netze verwendet werden. Die Sensoren können einen Algorithmus aufweisen, der zunächst analysiert, ob der gemessene Umgebungsparameter einen Schwellenwert überschreitet und die Warnnachricht nur bei einer Überschreitung des Schwellenwertes senden. Dies verhindert auf vorteilhafte Weise, dass unnötig oft eine Warnnachricht versendet wird.

Dabei ist der Identifizierungscode ein deterministischer Identifizierungscode oder ein randomisierter Identifizierungscode, der dem Nutzerendgerät beim Eintritt in das Gebiet bereitgestellt wird.

Generell sind die Eigenschaften und die potentielle Anwendung von Post-Shannon-Nachrichten aus "Shaping Future 6G Networks: Needs, Impacts, and Technologies", 2022, John Wiley & Sons Ltd" bekannt.

Dadurch, dass die Warnnachricht als Post-Shannon Nachricht versendet wird und von dem Empfänger nur noch identifiziert werden muss, kann in einer Gefahrensituation sehr effizient eine große Menge an Warnnachrichten versendet werden, da die Post-Shannon Nachrichten im Gegensatz zu herkömmlichen Nachrichten nur ein Bruchteil an Datenmenge aufweisen. Zudem wird dadurch erreicht, dass mit einer geringen Verzögerung die Nutzerendgeräte, insbesondere Smartphones, der Menschen in dem betroffenen Gebiet, die Warnnachrichten erhalten und die Nutzer entsprechend warnen können. Da bevorzugt eine Vielzahl der Sensoren die Warnnachrichten in zeitlich kurzem Abstand senden, gibt es keine "single-point-of-failure" bei dessen Ausfall die Nachrichten nicht mehr weitergeleitet werden würden. Nachdem die Nutzerendgeräte die Post-Shannon Warnnachrichten empfangen haben, können sie diese identifizieren und dadurch z.B. die Frage beantworten "liegt eine Gefahrenmeldung für das Gebiet in dem aktuell befinde vor"? Ist dies der Fall, kann eine Warnung an den Nutzer ausgewiesen werden.

In einer Ausführungsform sendet der zumindest eine Sensor die Warnnachricht an zumindest ein Warngerät, zumindest eine Basisstation und/oder an zumindest ein Nutzerendgerät. In einer Ausführungsform kann es sich bei dem zumindest einen Warngerät um eine Basisstation handeln. Das Warngerät ist bevorzugt in einer Funkreichweite der Sensoren. Insbesondere kann das Warngerät hierzu zentral innerhalb eines Peer-to-Peer Netzwerks der Sensoren lokalisiert sein. Dies hat den Vorteil, dass die Sendeleistung der Sensoren reduziert werden kann, da die Warnnachrichten "lediglich" das Warngerät erreichen müssen. Das Warngerät kann ein Mobilfunkmodul aufweisen, um die Nachrichten beispielsweise an ein Satellitennetzwerk und/oder ein Kommunikationsnetzwerk eines Mobilfunkanbieters zu übertragen. Handelt es sich bei dem Warngerät um eine Basisstation, sind die Nachrichten schon Kommunikationsnetzwerk eines Mobilfunkanbieters angekommen. Die Basisstation kann in diesem Fall die Warnnachrichten, insbesondere ebenfalls per Broadcast, absenden, um die Warnnachricht an Nutzerendgeräte weiterzuleiten. Das Warngerät kann deswegen ausgerichtet sein, eine deutlich höhere Sendeleistung als die Sensoren bereitzustellen und kann beispielsweise eine eigene Stromversorgung aufweisen. Diese Konstellation hat dann also den Vorteil, dass die Mehrzahl an Sensoren energiearm betrieben werden kann, wobei eine Hauptsendeleistung an das Warngerät ausgelagert wird. Das Warngerät kann zudem einen Algorithmus aufweisen, der zunächst analysiert, ob basierend auf den eingegangenen Warnnachrichten überhaupt ein möglicher Alarmfall vorliegt. Hierzu kann das Warngerät die Warnnachrichten zunächst identifizieren und beispielsweise erst dann einen Alarmfall feststellen, wenn mehr als eine festlegbare Anzahl von Sensoren eine Warnnachricht gesendet haben. Das Warngerät kann dann diese zuvor eingegangen Warnnachrichten weiterleiten oder selbst eine neue Warnnachricht generieren und diese entsprechend versenden.

In einer bevorzugten Ausführungsform leitet die Basisstation die Warnnachricht über ein mobiles Kommunikationsnetzwerk, insbesondere ein 5G oder 6G Kommunikationsnetzwerk, an das Nutzerendgerät weiter. Hierzu kann das Kommunikationsnetzwerk ein logisch getrenntes Slice für die Warnnachricht reservieren.

Aufgrund der Effizienz der Post-Shannon-Warnnachrichten kann ein Mobilfunkanbieter ein logisch getrenntes Slice für die Warnnachrichten reservieren ohne hierbei zu viele Ressourcen blockieren zu müssen. Zugleich ermöglicht die Reservierung eines logisch getrennten Slice, dass für den Alarmfall auf jeden Fall genug Ressourcen zur Verfügung stehen, um die Warnnachrichten schnell und zuverlässig innerhalb des Netzwerks des Mobilfunkanbieters an die Nutzerendgeräte senden zu können.

In einer Ausführungsform bildet eine Mehrzahl von Sensoren ein Peer-to-Peer Netzwerk zum Weiterleiten der Warnnachricht aus.

Dies hat den Vorteil, dass die einzelnen Sensoren sehr effizient betrieben werden können, da ihre Funkleistung lediglich ausreichen muss, um den nächsten Sensor zu erreichen. Zugleich zeichnet sich ein Peer-to-Peer Netzwerk durch eine hohe Redundanz aus. Dies ermöglicht es, dass besonders zuverlässig zumindest eine Nachricht das Warngerät erreicht, welches die Nachricht mittels seines Mobilfunkmoduls weiterleiten können. Prinzipiell ist natürlich auch möglich, dass die Sensoren Mobilfunkmodul aufweisen, um die Nachricht auch ohne die Hilfe des Warngerätes direkt an eine Basisstation und/oder Nutzerendgeräte zu versenden, insbesondere per Broadcast-Sidelink.

In einer bevorzugten Ausführungsform wird ein Autorisierungsverfahren verwendet, wobei nur die Warnnachrichten von autorisierten Sensoren und/oder autorisierten Warngeräten weitergeleitet werden.

Dies hat den Vorteil, dass dadurch ein Sicherheitsfeature implementiert wird, welches verhindert, dass unautorisierte Sensoren, insbesondere innerhalb des Peer-to-Peer-Netzwerks, eine Lawine von Warnnachrichten auslösen können. Auf diese Weise können Angriffe auf das Kommunikationssystem zum Warnen vor Gefahrensituationen effizient verhindert werden - ebenfalls ist es hierdurch beispielsweise möglich Warnnachrichten von defekten Sensoren, die beispielsweise fehlerhafte Warnnachrichten absenden, nicht mehr zu berücksichtigen.

Anspruchsgemäß ist der Identifizierungscode ein deterministischer Identifizierungscode oder ein randomisierter Identifizierungscode.

Der randomisierte Identifizierungscode hat den Vorteil, dass dieser es ermöglicht die Post-Shannon-Warnnachrichten mit maximaler Effizienz übertragen zu können. Um den randomisierten Identifizierungscode zu generieren kann es allerdings notwendig sein Zufallsexperimente auszuführen und diese zu beobachten. Der deterministische Identifizierungscode erlaubt ebenfalls eine Effizienzsteigerung im Vergleich zu herkömmlichen Warnnachrichten. Es kann Ausführungsformen des deterministischen Identifizierungscodes geben, die effizienter zu erzeugen sind als die entsprechenden Zufallsexperimente zum Erlangen des randomisierten Zufallscodes. Der randomisierte Identifizierungscode kann in Form einer Hash-Funktion implementiert werden, wobei die Hash-Funktion als eine Variable einen Seed S aufweist. Der deterministische Identifizierungscode ist eine spezielle Konstruktion, die spezifisch für ein Gedächtnis eines Kanals ist (Gedächtnis = die Beeinflussung der Übertragung eines Symbols durch die Übertragung vorheriger Symbole). Für "gedächtnislose" Kanäle (alle Symbole werden unabhängig übertragen) ist ein deterministischer ID-code eine Familie von Codewörtern, die eine bestimmte minimale Distanz haben, die deutlich niedriger sein kann als für einen Shannon'schen Übertragungscode.

Dabei wird der Identifizierungscode dem Nutzerendgerät beim Eintritt in das Gebiet bereitgestellt, insbesondere überträgt das Kommunikationsnetzwerk, insbesondere des Mobilfunkanbieters, den Identifizierungscode an das Nutzerendgerät. Insbesondere können sich neue Identifizierungscodes als effizienter herausstellen, sodass diese den Geräten neu bereitgestellt werden können. Zusätzlich oder alternativ kann regelmäßig einer neuer Seed, beispielsweise täglich, wöchentlich oder monatlich, bereitgestellt werden. In einer Ausführungsform wird der Seed dem Nutzerendgerät beim Eintritt in das Gebiet bereitgestellt

Sobald sich das Nutzerendgerät also mit einer neuen Basisstation verbindet (beispielsweise bei einem Hand-Over Vorgang), können die Identifizierungscodes und/oder der Seed an das Nutzerendgerät gesendet werden. Insbesondere ist es hierbei vorteilhaft, wenn jedem Identifizierungscode und/oder jedem Seed jeweils eine eindeutige ID zugeordnet ist und vor dem Übertragen eine Kommunikation zwischen dem Nutzerendgerät und der Bereitstellungseinheit (z.B. der Basisstation) stattfindet, ob der Identifizierungscode und/oder der Seed mit der eindeutigen ID schon auf dem Nutzerendgerät vorhanden ist. In diesem Fall kann nämlich auf eine (erneute) Übertragung des Identifizierungscodes und/oder des Seeds verzichtet werden. Dies ist insbesondere deshalb sinnvoll, da davon ausgegangen werden kann, dass ein Gefahrengebiet in der Regel größer als eine Mobilfunkzelle sein dürfte, die von einer Basisstation abgedeckt wird, sodass eine Mehrfachübertragung insbesondere des Seeds verhindert wird.

In einer Ausführungsform wird der Identifizierungscode und/oder der Seed in einen Ringspeicher des Nutzerendgerätes übertragen. Der Ringspeicher kann insbesondere als ein virtueller Ringspeicher ausgebildet sein.

Dies ist beispielsweise für den folgenden Anwendungsfall besonders pragmatisch: der Nutzer fährt (an einem Tag) mit seinem Nutzerendgerät durch ganz Deutschland. Sobald er in ein neues Gefahrengebiet eintritt, werden ihm automatisiert die entsprechenden Identifizierungscodes und/oder Seeds der jeweiligen Gefahrengebiete übertragen. Solange sich der Nutzer also immer weiterbewegt, hat dies zur Folge, dass sich der Speicherbedarf der Identifizierungscodes beständig vergrößert, obwohl sich der Nutzer schon längst aus den entsprechenden Gefahrengebieten herausbewegt hat. Der Ringspeicher löst dieses Problem dadurch, dass er eine maximale Kapazität aufweist und die ältesten Einträge automatisch durch die neuesten ersetzt. Dies bedeutet, dass die Identifizierungscodes des aktuellen Gefahrengebiets zuverlässig in dem Ringspeicher vorhanden sind und genutzt werden können, wobei alte Identifizierungscodes gelöscht werden. Es wäre eine weitere Möglichkeit, die Identifizierungscodes aktiv aus einem Speicher des Nutzerendgeräts zu löschen, wenn der Nutzer das entsprechende Gefahrengebiet verlässt. Allerdings würde dies eine zusätzliche Kommunikation erfordern und wäre nicht so effizient für den Fall, dass der Nutzer wieder in ein vorheriges Gefahrengebiet zurückkehrt, da diese in diesem Fall erneut übertragen werden müssten (wie dies beispielsweise beim Pendeln der Fall ist). Der Ringspeicher löst auf elegante Weise diese beiden Probleme.

In einer Ausführungsform ist der deterministische Identifizierungscode und/oder der randomisierte Identifizierungscode je nach Gebiet und/oder je nach Gefahrenquelle verschiedenartig ist.

Dies hat den Vorteil, dass verschiedenartige Nachrichten und/oder verschiedenartige Gefahrenquellen mittels der Post-Shannon Nachrichten identifiziert werden können. Hierdurch wird ermöglicht, dass Identifizierungscodes zu einer Informationsnachricht gemapped werden können.

Beispielsweise kann ein erster Identifizierungscode zu der Nachricht gemapped werden: "es besteht Überflutungsgefahr im Ahrtal" und ein zweiter Identifizierungscode zu der Nachricht "es besteht Überflutungsgefahr in Köln".

Bevorzugt kann ein Seed des randomisierten Identifizierungscodes, die Hash-Funktion des randomisierten Identifizierungscodes und/oder der deterministische Identifizierungscode jeweils an den zumindest einen Sensor, das zumindest eine Warngerät und/oder das zumindest eine Nutzerendgerät bereitgestellt werden.

Hierdurch wird vorteilhaft ermöglicht, dass die aufgeführten Einheiten alle in der Lage sind sowohl eine Post-Shannon Nachricht zu kodieren als auch zu identifizieren.

In einer bevorzugten Ausführungsform wird der Identifizierungscode und/oder der Seed zu Zeiten niedrige Netzwerkauslastung verteilt. Eine Menge an Seeds, die in einer Funkzelle pro Tag verteil werden, kann größer als 1 GB sein. Der Begriff Seed wird in der Anmeldung sowohl in einem Zusammenhang verwendet, der er sich auf einen einzelnen Seed als auch auf die Menge an Seeds bezieht. Aus dem Kontext ergibt sich, welcher Fall gemeint ist. Beispielsweise wird nur "ein" Seed als Variable in die Hash-Funktion eingesetzt. Dieser Seed wird aber aus der Menge an Seeds ausgewählt, die den Geräten wie vorstehend beschrieben bereitgestellt werden.

Dies hat den Vorteil, dass eine Belastung des Kommunikationsnetzwerks möglichst gering ausfällt

Die Anzahl der Daten, die an die Endgeräte, also insbesondere die Smartphones der Nutzer übertragen wird, kann in vorteilhafterweise dadurch reduziert werden, indem zwei verschiedene Teil-Systeme zum Weiterleiten der Nachrichten eingerichtet werden.

Hierbei sind zwei Alternativen möglich, die nachstehend als Alternative A) und B) beschrieben werden.

Variante A) Zwei verschiedene Teil-Systeme:
**In** der Variante A können die Sensoren und das zumindest eine Warngerät ein erstes Kommunikationsteilsystem ausbilden und das zumindest eine Warngerät und die Nutzerendgeräte ein zweites Teilsystem ausbilden, wobei die folgenden Schritte ausgeführt werden:
- Bereitstellen eines ersten Seeds an das erste Teilsystem und Bereitstellen eines zweiten Seeds an das zweite Teilsystem; der Seed kann beispielsweise über das Kommunikationsnetzwerk des Mobilfunkproviders und/oder über Peer-to-Peer bereitgestellt werden;
- Senden der Warnnachricht als Post-Shannon Nachricht innerhalb des ersten Teilsystems und Weiterleiten der Warnnachricht als Post-Shannon Nachricht durch das Warngerät innerhalb des zweiten Teilsystems an die Nutzerendgeräte.
   ∘ Das Senden und das Weiterleiten der Warnnachrichten kann insbesondere dann ausgeführt werden, wenn (insbesondere das Warngerät) feststellt, dass es sich um eine Gefahrensituation handelt.
   ∘ Vor dem Weiterleiten der Warnnachrichten, kann das Warngerät die Nachricht mit dem ersten Seed identifizieren und/oder mit dem zweiten Seed kodieren, die Nutzerendgeräte identifizieren die Warnnachrichten dann ebenfalls mit dem zweiten Seed.

Die Bereitstellung des Seeds an die Sensoren und insbesondere an die Nutzerendgeräte kann eine erhebliche Datenmenge erfordern, da vorzugsweise jeder Sensor eindeutig identifizierbar sein soll. Durch die Aufteilung in das erste und das zweite Teilsystem wird diese Datenmenge deutlich reduziert. Das Weiterleiten innerhalb des zweiten Teilsystems als Post-Shannon Nachricht ist wiederum sehr effizient hinsichtlich der Datenübertragung.

Nachteilig muss in der Variante A) dem zweiten Teilsystem allerdings auch der Seed bekanntgemacht werden und die Nutzerendgeräte müssen die Post-Shannon Nachrichten energieaufwendig identifizieren. Diese Nachteile können durch die Variante B) der zwei verschiedene Teil-Systeme überwunden werden:
Variante B) Zwei verschiedene Teil-Systeme:
In der Variante B können die Sensoren und das zumindest eine Warngerät ein erstes Kommunikationsteilsystem ausbilden und das zumindest eine Warngerät und die Nutzerendgeräte ein zweites Teilsystem ausbilden, wobei die folgenden Schritte ausgeführt werden:
- Bereitstellen eines ersten Seeds nur an das erste Teilsystem; der Seed kann beispielsweise über das Kommunikationsnetzwerk des Mobilfunkproviders und/oder über Peer-to-Peer bereitgestellt werden;
- Senden der Warnnachricht als Post-Shannon Nachricht innerhalb des ersten Teilsystems und Weiterleiten der Warnnachricht als non-Post-Shannon Nachricht durch das zumindest eine Warngerät innerhalb des zweiten Teilsystems an die Nutzerendgeräte.
   ∘ Das Senden und das Weiterleiten der Warnnachrichten kann insbesondere dann ausgeführt werden, wenn (insbesondere das Warngerät) feststellt, dass es sich um eine Gefahrensituation handelt.
   ∘ Vor dem Weiterleiten der Warnnachrichten, kann das Warngerät die Nachricht mit dem ersten Seed identifizieren, und diese dann als non-Post-Shannon Nachricht weiterleiten. Gegebenfalls kann das Warngerät zusätzlich die Warnnachrichten mehrerer Sensoren zusammenfassen vor dem Weiterleiten zusammenfassen. Eine klassische Shannon Kommunikation kann als non-Post-Shannon Nachricht bezeichnet werden. Bei ganz klassischen Nachrichten als non-Post-Shannon Nachricht müssen die Endgeräte auch nicht mehr notwendigerweise empfangsbereit für Broadcast-Nachrichten sein.

Hierdurch wird die Menge des zu Bereitstellenden Seeds als weiter verringert, die Nutzerendgeräte müssen gar nicht eingerichtet sein, um Post-Shannon Nachrichten identifizieren zu können, wobei zugleich der Energiehaushalt der Nutzerendgeräte geschont wird.

In einer Ausführungsform werden beteiligte Kommunikationsnetzwerke zum Senden und/oder Empfangen der Warnnachrichten und Gefahrenquellen getrennt modelliert.

Dies hat den Vorteil, dass hierdurch ein alternatives und auf eine Vielzahl von Anwendungen anpassbares Verfahren ermöglicht wird, dass insbesondere in der Lage ist verschiedene Gefahrenquellen in sich überlagernden Gefahren Gebieten zu modellieren und zu berücksichtigen.

Gemäß einem zweiten Aspekt der Erfindung ist ein Sensor zum Warnen vor Gefahrensituationen in einem Gebiet angegeben, wobei der Sensor aufweist
ein Messmodul zum Messen von zumindest einem Umgebungsparameter, wobei der Umgebungsparameter geeignet ist eine Gefahrensituation zu charakterisieren;
ein Sensor-Rechnermodul, wobei das Rechnermodul eingerichtet ist eine Warnnachricht, insbesondere für das Gebiet, als eine Post-Shannon Nachricht zu erzeugen, wobei das Rechnermodul eingerichtet ist einen Identifizierungscode abzuspeichern und basierend auf dem Identifizierungscode die Post-Shannon Nachricht zu kodieren; ein Sensor-Transceiver-Modul, wobei das Sensor-Transceiver-Modul eingerichtet ist die kodierte Post-Shannon Warnnachricht zu versenden.

Der Sensor ist insbesondere eingerichtet, die Schritte des Verfahrens auszuführen, die dem Sensor technisch zugeordnet sind.

Gemäß einem dritten Aspekt der Erfindung ist ein Nutzerendgerät zum Empfangen von Warnnachrichten in einem Gebiet angegeben, wobei das Nutzerendgerät aufweist:
ein Nutzerendgerät-Empfangsmodul eingerichtet zum Empfangen einer kodierten Post-Shannon Warnnachricht;
ein Nutzerendgerät-Rechnermodul eingerichtet um einen Identifizierungscode abzuspeichern und um die kodierte Post-Shannon Warnnachrichten auf Basis des Identifizierungscodes zu identifizieren, wobei eine Warnmeldung an den Nutzer ausgegeben wird, wenn eine Warnung für das Gebiet, insbesondere in dem sich der Nutzer befindet, festgestellt wird.

Bei dem Nutzerendgerät kann es sich beispielsweise um ein Smartphone, ein Tablett, ein Computer, oder ein Wearable handeln.

Das Nutzerendgerät ist insbesondere eingerichtet, die Schritte des Verfahrens auszuführen, die dem Nutzerendgerät technisch zugeordnet sind. Bevorzugt ist das Nutzerendgerät eingerichtet sich sein "Warngebiet" selbst zu definieren beispielsweise auf der Grundlage von Informationen in einem Kartenmaterial.

Gemäß einem vierten Aspekt der Erfindung ist ein Warngerät zum Warnen vor Gefahrensituationen in einem Gebiet angegeben, wobei das Warngerät aufweist: ein Warngerät-Transceiver-Modul, wobei das Warngerät-Transceiver-Modul eingerichtet ist kodierte Post-Shannon Warnnachricht von Sensoren zum Empfangen und an Nutzerendgeräte weiterzuleiten.

Das Warngerät ist insbesondere eingerichtet, die Schritte des Verfahrens auszuführen, die dem Warngerät technisch zugeordnet sind.

Gemäß einem fünften Aspekt der Erfindung ist ein Kommunikationssystem zum Warnen vor Gefahrensituationen in einem Gebiet angegeben, wobei das Kommunikationssystem zum Ausführen der Schritte nach einem der vorstehend beschriebenen Verfahren eingerichtet ist.

Das Kommunikationssystem ist insbesondere eingerichtet, die Schritte des Verfahrens auszuführen, die dem Kommunikationssystem technisch zugeordnet sind.

Insbesondere weist das Kommunikationssystem zumindest einen vorstehend beschriebenen Sensor, ein vorstehend beschriebenes Warngerät, und/oder ein vorstehend beschriebenes Nutzerendgerät auf.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1:: zeigt das erfindungsgemäße Kommunikationssystem;
- Fig. 2:: zeigt das erfindungsgemäße Verfahren;

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Die nachfolgenden Ausführungen können prinzipiell auf alle Ausführungsformen der Erfindung angewendet werden, insbesondere beliebig kombiniert werden, sofern dies technisch möglich und nicht explizit ausgeschlossen ist.

Die sogenannte Post-Shannon Kommunikationsmethode erlaubt es Nachrichten sehr effizient von einem Sender zu einem Empfänger zu senden. Beschrieben ist diese Methode beispielsweise in dem Textbuch "Shaping Future 6G Networks: Needs, Impacts, and Technologies, First Edition. Edited by Emmanuel Bertin, Noel Crespi, and Thomas Magedanz. 2022 John Wiley & Sons Ltd. Published 2022" in dem Kapitel 16 "6G and the Post Shannon-Theory", wobei dieses Kapitel hiermit vollumfänglich in die Offenbarung der Erfindung aufgenommen wird.

Die Post-Shannon Kommunikationstheorie erlaubt es, Nachrichten zu kodieren die per Broadcast an alle Teilnehmer versendet werden, die aber nur für einen oder wenige Teilnehmer bestimmt sind, insbesondere für die Teilnehmer, die sich in einem Gefahrengebiet befinden. Wenn nur wenige (im Verhältnis zur Nachrichtenanzahl) Teilnehmer die Nachricht empfangen, beantwortet jeder Teilnehmer, der die Nachricht empfängt die Frage: "habe ich die Nachricht XY erhalten" entweder mit "Ja" oder "Nein". Eine Nachricht muss also lediglich identifiziert werden, es muss aber nicht die gesamte Nachricht XY "an-sich" gesendet werden - es reicht quasi aus, lediglich Kennzeichnungsmerkmale der Nachricht XY - die diese Nachricht von einer anderen Nachricht unterscheiden - von dem Sender zu dem Empfänger zu senden. Liegt diese Nachricht XY bei dem Empfänger schon vorab vor, kann dieser anhand der Kennzeichnungsmerkmale identifizieren, ob die Kennzeichnungsmerkmale der Nachricht XY entsprechen. Falls er dies bejaht, würde er also ein "Ja" als Ergebnis erhalten. Aus diesem Grund werden die Post-Shannon Nachrichten auch als "Identifikations-Nachrichten" bezeichnet.

Die für die Identifikations-Nachrichten zu verwendete Kanalkapazität des Mobilfunknetzes ist verschwindend gering im Vergleich zu gewöhnlichen Nachrichten, die den gesamten Nachrichteninhalt umfassen.

In der Theorie wird ein doppelt logarithmisches Verhalten vorhergesagt. Anders ausgedrückt: Wenn M Nachrichten zuverlässig über einen Kanal übertragen werden können, so ist es möglich ca. 2*^{M}* Identifikations-Nachrichten über diesen Kanal zu identifizieren, insbesondere sofern die Gesamtmenge an Identifikations-Nachrichten und ihre Kodierung per Konfiguration zwischen dem Sender und dem Empfänger vereinbart wurde. Für die Identifikation kann die gleiche Kanalkapazität verwendet werden wie für die Nachrichtenübertragung. Aus diesem Grund ist es möglich Post-Shannon-codierte Daten sehr effektiv auf einem Broadcast-Kanal einzusetzen.

Eine ähnliche Leistungsfähigkeit kann erreicht werden, wenn jeder Teilnehmer K-viele Nachrichten gleichzeitig prüft. In diesem Fall stellt sich der Empfänger die Frage "habe ich eine der Nachrichten aus der Menge {A, B, C, D, E} erhalten?". Dieses Post-Shannon-Problem wird als K-Identifikation bezeichnet. Wenn N Empfänger eines Broadcast-Kanals gleichzeitig K-identifizieren wollen ist - analog zur reinen K-Identifikation - Zuverlässigkeit theoretisch gewährleistet, falls gilt log (log (*M*)) *+* 2 log (*N K*) ≤ *C*, wobei C die Kanalkapazität ist. Bei der K-Identifikation führt man beim aktuellen Stand der Technik der Empfänger seinen Teil des Identifikationscodes K mal aus, bei N gleichzeitigen Empfängern K*N.

(K-) Identifikationscodes profitieren vom Seed als gemeinsamen Zufall ("common randomness"), um die Gesamtzahl der möglichen Nachrichten auf dem Kanal zu erhöhen und von der Kanalkapazität zu entkoppeln. Der Seed den sowohl Sender als auch Empfänger kennen, ist vergleichbar mit einem kryptografischen Schlüssel. Hierbei kann mithilfe eines Fehlerkorrekturcodes( FEC) und ca. log M Zufallsbits als Seed, ein sogenannter "Tag" aus circa 2 log (N*K) Bits ausgewählt und nur dieser über den Kanal Sender-Empfänger übertragen werden. Da angenommen wird, dass der Sender und alle Empfänger die korrespondierenden Zufallbits kennen, können die Empfänger mithilfe der Zufallbits und des Tags mit hoher Wahrscheinlichkeit korrekt testen, ob die gesendete Nachricht eine seiner, insbesondere im Vorfeld beim Empfänger hinterlegten, K Nachrichten ist. Der Empfänger testet also, ob eine der K Nachrichten die kennzeichnenden Merkmale des Tags aufweisen. Die Gesamtzahl M der Nachrichten kann hierbei im Prinzip beliebig groß sein, aber es muss weiterhin gelten: 2 log (N*K) ≤ C.

Zur Realisierung der Erfindung können bevorzugt auch die in diesem Zusammenhang erstmals getroffenen erfinderischen Annahmen beitragen:
Zumindest eine bestimmte Region, insbesondere die ganze Welt, ist vollständig mit Sensoren vernetzt. Dies bedeutet, dass davon ausgegangen werden kann, dass in einem bestimmten Flächenbereich eine Mindestanzahl von Sensoren vorhanden ist. So wird angenommen, dass die bestimmte Region oder die gesamte Erde flächendeckend mit seismischen Sensoren (zur Erdbebendetektion, Wassersensoren (zur Detektion von Überschwemmungen, Wellensensoren (zur Detektion von Bewegungen der Wasseroberfläche), akustischen Sensoren (zur Detektion akustischer Signale in Wasser und Luft), chemische Sensoren (zur Detektion chemischer Stoffe), Dosimetern (zur Detektion radioaktiver Strahlung) und/oder anderen Sensoren versehen sein kann.

Die Anzahl der Sensoren, insbesondere ausgestaltet als IoT-Devices, ist hierbei extrem hoch, wobei unter der Annahme, dass ein Sensor pro Quadratkilometer Erdoberfläche vorhanden sein kann, sich eine Gesamtmenge von 10¹² - 10¹³ Sensoren ergeben kann, die zu einem Kommunikationsnetzwerk verbunden werden können, um entsprechende Warnmeldungen abgeben zu können.

Es ist eine weitere bevorzugte Annahme, dass fast jeder Mensch auf der Erde auf irgendeiner Art und Weise vernetzt ist oder in Zukunft vernetzt sein wird und somit Zugang zu dem Kommunikationsnetzwerk aufweist. Mögliche Endgeräte mit denen diese Vernetzung realisiert werden kann sind: Mobilfunkgeräte, smarte Brillen, Hörgeräte, Wearables, smarte Uhren, und/oder andere vernetzte Geräte. Hieraus kann sich eine Gesamtmenge von 10¹⁰ vernetzten Geräten ergeben, die in der Lage sind, eine Warnmeldung zu empfangen und den Nutzer entsprechend zu informieren, beispielsweise durch ein Tonsignal, ein Lichtsignal, elektrische Spannung und/oder eine Nachricht.

Von all diesen Menschen wird sich jedoch nur ein Bruchteil der Empfänger in einem Katastrophengebiet aufhalten. Demnach ist die Anzahl der Empfänger bzw. Menschen, die tatsächlich gewarnt werden sollen, deutlich geringer. Beispielhaft soll dies anhand der Flutkatastrophe im Ahrtal als mögliches Szenario illustriert werden. So hat der Kreis Ahrweiler eine Fläche von 787 km². Die Erdoberfläche beträgt ca. 510 Millionen km², sodass das angenommene Katastrophengebiet ca. 1/10⁶-tel der Erdoberfläche ausmacht. Wird nun ferner angenommen, dass die Endgeräte gleichmäßig verteilt wird, kann abgeschätzt werden, dass ca. 10.000 Endgeräte im potentiellen Katastrophengebiet vorhanden sind. Somit ist die Annahme, dass die Anzahl der zu informierenden Geräte relativ zu der Gesamtanzahl der Geräte klein ist, nachvollziehbar. Insbesondere sollte die Anzahl der Endgeräte die gewarnt werden sollen weniger als 0,1%, insbesondere weniger als 0,001%, der Gesamtanzahl der Endgeräte entsprechen.

Insbesondere kann zudem angenommen werden, dass zumindest ein Kommunikationsnetzwerk allgegenwärtig vorhanden ist, wobei andere Kommunikationsnetzwerke mittels des Kommunikationsnetzwerks kommunizieren können. In diesem Sinne, dass also (fast) jeder der Sensoren zumindest ein Kommunikationsnetzwerk erreichen kann. Hierbei kann es sich um Mobilfunknetzwerke mit zellenartiger Architektur, Satellitennetzwerke mit keulenartiger Abdeckung und/oder um Peer-to-Peer Netzwerke der Sensoren untereinander handeln. Die Gefahrenquellen vor denen gewarnt werden soll, können separat von der Netzwerkabdeckung modelliert werden. Beispielhaft orientieren sich die Gefahrenquellen hierbei an geographischen Eigenschaften der Erde, zum Beispiel dem Verlauf von tektonischen Spannungszonen, Küstenlinien und/oder Flusstälern. Im Allgemeinen dürfte gelten, dass die Gefahrenquellen und somit ihre geographische Ausdehnung räumlich limitiert sind. Selbst im Fall eines Austritts von gefährlichen Chemikalien, wird eine Gefährdung umso unwahrscheinlicher, je weiter man von dem Ursprungsort entfernt ist. Die Trennung von Kommunikationsnetzwerken und Gefahrenquellen erzeugt ein adaptives und auf eine Vielzahl von Anwendungen anpassbares Verfahren.

Sowohl die Gefahrenquellen, respektive die sie überwachenden Sensoren, als auch die Netzwerke können auf Basis eines einheitlichen Koordinatensystems moduliert werden. Dazu können beispielsweise geographische Koordinaten, wie die geographische Länge und Breite, verwendet werden. Somit ist jeder Standort eines Sensors, jedes Warngerät, jede Mobilfunkzelle oder jede Satelliten-Strahlungskeule sowie jede Gefahrenzone eindeutig definierbar.

Es kann Sensoren geben, die unautorisiert (z.B. als Störsender) senden. Es kann angenommen werden, dass deren Zahl deutlich geringer ist als die Zahl an Sensoren in einem Gefahrengebiet, die autorisiert und korrekt senden. Dies kann für die Empfindlichkeit des Warnsystems eine Rolle spielen. Um die Zahl an Störsendern gering zu halten, kann das Netzwerk eingerichtet sein diese erkennen und deren Nachrichten ignorieren.

Bevorzugt werden zwei logisch getrennte, insbesondere technisch verschiedene, (Kommunikations-)Netzwerke verwendet. Möglich ist ein "normales" schon vorhandenes Netzwerk als ein erstes Netzwerk, also beispielsweise ein Mobilfunknetzwerk und/oder ein Satellitennetzwerk, sowie ein zweites (Kommunikations-)Netzwerk, insbesondere als Peer-to-Peer Netzwerk oder weiteres Mobilfunknetzwerk zum Austausch der Warnungen, welches von den Sensoren selbst ausgebildet wird - wobei die Warnungen als Identifikations-Nachrichten versendet werden.

Anstatt oder zusätzlich zu dem ersten und dem zweiten Netzwerk können auch ein erstes (Netzwerk-)Slice und/oder ein zweites (Netzwerk-)Slice eines 5G oder 6G Kommunikationssystem genutzt werden, wobei das erste und das zweite Slice, insbesondere auf dieselben physischen Ressourcen zurückgreifend, logisch getrennt voneinander betrieben werden, aber mittels geeigneter Schnittstellen miteinander kommunizieren können. Das logisch getrennte zweite (Netzwerk-)Slice kann für die Post-Shannon Nachrichten der Sensoren reserviert sein.

Insbesondere im Fall, dass das erste Netzwerk ein Mobilfunknetzwerk ist, kann das zweite Netzwerk zwar logisch getrennt von dem ersten Netzwerk betrieben werden, aber dennoch dessen physische Ressourcen nutzen - also beispielsweise ein getrenntes Slice verwenden, dieselbe Basisstation nutzen, etc. Ab 5G ist es für einen Netzwerkoperator einfach möglich, logisch getrennte Netzwerk-Slices zu betreiben. Das zweite Netzwerk und/oder das den Sensoren zugeordnete Netzwerk-Slice kann, insbesondere bei der Bereitstellung der physischen Ressourcen, eine höhere Priorität aufweisen, sodass die entsprechenden Warn-Identifikations-Nachrichten auf jeden Fall übertragen werden. D. h., dass für den Fall, dass auf gemeinsame Ressourcen zurückgegriffen wird, eine Störung des Mobilfunknetzes zugunsten der gesicherten Weiterleitung der Warnmeldungen akzeptiert wird.

Das zweite Netzwerk, auch als Warn-Netzwerk bezeichnet, kann als virtuelles Netzwerk realisiert werden, das über das Mobilfunknetz vermittelt wird, oder als Peer-to-Peer Netzwerk, das dieselben physikalischen Ressourcen nutzt, wie beispielsweise Frequenzbänder. Das erste Netzwerk und/oder das zweite Netzwerk können eingerichtet sein, um Identifikations-Nachrichten der Sensoren weiterzuleiten, sodass diese Nachrichten auch zu Mobilfunkzellen gelangen, die beispielsweise außerhalb einer Reichweite (insbesondere Broadcast-, Sendereichweite) der Sensoren sind. Bevorzugt werden die schon vorhandenen Broadcast-Kanäle der vorhandenen Mobilfunknetzwerke genutzt.

Realisierung des Zugangs zu dem Netzwerk, insbesondere zu dem ersten und/oder dem zweiten Netzwerk:
Für das Peer-to-Peer Netzwerk und/oder wenn die Sensoren mit einem Mobilfunknetzwerk kommunizieren, werden bevorzugt Broadcast-Kanäle, zum Beispiel mittels 5G Sidelink, zur Kommunikation auf öffentlich verfügbaren Frequenzen verwendet. Diese Kommunikationskanäle können eine Störanfälligkeit aufweisen, zudem kann nicht ausgeschlossen werden, dass diese Frequenzen (für andere Nachrichten) "missbraucht" werden. Aufgrund der minimalen "spektralen Verbräuche" - also der sehr effizienten Datennutzung - der Post-Shannon Kommunikationslösung, sollte ein Missbrauch der Kommunikationskanäle in der Regel keinen Einfluss auf die Warn-Funktion der Erfindung haben, da Kollisionen der physikalischen Warnsignale sehr unwahrscheinlich sind. Zu diesem Zweck kann bevorzugt ein besseres Access-Protokoll als zufällig ausgewählte Ressource-Blocks verwendet werden, da es sonst Kollisionen geben kann, falls ein Alarm gesendet wird. Diese Kollisionen können mit anderen Alarmsignalen aber auch eventuell mit normalen Nachrichten passieren.

Für möglicherweise notwendige Weiterleitungen eines durch einen ersten Sensor abgesendeten Warnsignals in Form eine Identifikations-Nachricht durch weiteren Sensoren im Peer-to-Peer Netzwerk und/oder um "Störer" zu entdecken, können sich die Sensoren untereinander und gegebenenfalls mit einer Basisstation authentifizieren unter Verwendung einer asynchronen moderierten Lösung, um berechtigte Sensoren von Störern bzw. Angreiferin unterscheiden zu können. Hierzu sind beispielsweise folgende Möglichkeiten denkbar: Entweder sendet jeder Sensor seine Identität, die von einer zertifizierten Autorität (CA) zertifiziert ist oder es werden Kommunikationssitzungen einer begrenzten Dauer vereinbart. Zu Beginn kann sich jeder Sensor bei der CA authentifizieren und entsprechend einen Sitzungsschlüssel erhalten. Hierdurch kann von einem Peer-to-Peer Netzwerk erkannt werden, ob die Daten von einem berechtigten Sensor gesendet wurden und nur diese in der Folge weitergeleitet werden.

Es kann ein, insbesondere zentrales, Warngerät in dem ersten Netzwerk und/oder dem zweiten Netzwerk implementiert sein, welches eingerichtet ist, die Frequenzbänder also insbesondere die Broadcastkanäle - der Sensoren, insbesondere des Peer-to-Peer Netzwerks (das durch die Sensoren aufgespannt wird), auf gesendete Identifikations-Nachrichten hin zu überwachen. Das Warngerät kann einer der Sensoren sein oder auch eine eigenständige Netzwerkeinheit, insbesondere aufweisend ein Mobilfunkmodul zur Kommunikation mit dem Mobilfunknetzwerk und/oder Satellitennetzwerk. Insbesondere ist das Warngerät dazu eingerichtet die Identifikations-Nachrichten der Sensoren zu empfangen und gegebenenfalls diese auch mittels eines Algorithmus zu analysieren, ob tatsächlich ein möglicher Gefahrenfall vorliegt. Die Identifikations-Nachrichten können auch ausgestaltet sein, Messwerte zu übertragen. Die Frage lautet dann: "Hat der Sensor XY die Nachricht übertragen, dass der Messwert XZ ist?".

Das Warngerät kann zusätzlich im Gegensatz zu den Sensoren, eine höhere Funkleistung aufweisen und/oder direkt an ein Kommunikationsnetzwerk angeschlossen sein. Dies hat beispielsweise den Vorteil, dass die Sensoren relativ klein ausgestaltet sein können, einen niedrigen Energieverbrauch aufweisen können, weil die Hauptsendelast von dem Warngerät übernommen wird. Das zentrale Warngerät kann insbesondere mittig innerhalb eines Peer-to-Peer Netzwerks angebracht werden.

Das Warngerät kann insbesondere an das Stromnetz angeschlossen sein und/oder eine autarke Stromversorgung aufweisen. Hört das Warngerät lediglich die Nachrichten ab, ist eine Authentifizierung des Warngerätes nicht notwendig. Leitet das Warngerät selbst wiederum Nachrichten weiter, kann eine Authentifizierung, wie vorstehend beschrieben, vorteilhaft sein.

Mobilfunk- und/ oder Satelliten-Netzwerk: die Sensoren können direkt oder mittelbar vermittels eines Peer-to-Peer Netzwerks mit einer Basisstation eines Mobilfunknetzwerks und/oder einem Satelliten eines Satellitennetzwerks kommunizieren. Auch in dieser Ausgestaltung nutzen die Sensoren für die Kommunikation Broadcast-Kanäle des Mobilfunk- und/oder Satellitennetzwerks, um ihre Nachrichten bzw. Daten zu versenden. In diesem Fall können sich die Sensoren unter Verwendung einer synchron moderierten Lösung authentifizieren, um berechtigte Sensoren von Störern bzw. Angreifern unterscheidbar zu machen. Hierzu kann sich ein berechtigter Sensor in das Mobilfunk- und/ oder Satelliten- Netzwerk einbuchen und die standardisierten Registrierungsprozesse nutzen. Ein von dem Netzwerk übermittelter Access Token kann bei der Versendung der Nachrichten, respektive der Alarmsignale, verwendet werden. Die Warngeräte können eingerichtet sein, sich ebenfalls in das Mobilfunknetz einzuwählen und/oder das Mobilfunknetz zu überwachen und über die entsprechenden Broadcast-Kanäle der Mobilfunkzellen oder des Satellitennetzwerks die Warnungen der Sensoren zu empfangen.

Broadcast-Kanäle: die Sensoren und/oder die Warngeräte in einem bestimmten räumlichen Bereich, insbesondere einer Funkzelle, können einzeln oder gemeinsam einen Broadcast-Kanal des entsprechenden Peer-to-Peer-Netzwerks, Mobilfunknetzwerks und/oder Satellitennetzwerks nutzen. Vermittels der Nutzung des Broadcast-Kanals kann eine Verbindung der Alarmsignale der Sensoren zu den Endgeräten der Nutzer sichergestellt werden und Warnmeldungen lassen sich zeitnah übermitteln.

Nachrichten, also insbesondere die Warnsignale, die mittels Post-Shannon codiert werden, können in einer Ausführungsform räumlich auf das Mobilfunknetzwerk und/oder das Satellitennetzwerk beschränkt sein, welches die Sensoren direkt oder mittels eines entsprechend konfigurierten Peer-to-Peer- Netzwerks erreichen können. Dies umfasst den Zugang zu allen Broadcast-Kanälen aller erreichbarer Mobilfunknetzwerke und/oder Satellitennetzwerke im Umfeld eines Sensors, um garantiert alle Menschen oder Warngeräte in der Gefahrenzone erreichen zu können. Im Falle eines Peer-to-Peer-Netzwerks lässt sich die Reichweite der Sensoren-Nachrichten entweder durch die Sendeleistung des Senders regeln oder durch eine Veränderung der maximalen Anzahl von Hops in dem Peer-to-Peer-Netzwerk.

### Unabhängigkeit des Modells:

Jeder Sensor kann durch einen Ort in dem einheitlichen Koordinatensystem gekennzeichnet werden. Der Sensor kann seine Daten in alle erreichbaren Mobilfunkzellen und/oder Satellitenzellen übertragen. Innerhalb des Peer-to-Peer-Netzwerks ist die Reichweite des Signals ebenfalls räumlich limitiert. Ansonsten werden die Nachrichten der Sensoren, die Post-Shannon codiert sind, bevorzugt nicht in den Netzwerken weitergeleitet.

Jedes Endgerät kann selbstständig oder durch Interaktion mit dem Nutzer eine Gefahrenzone festlegen für die es informiert werden möchte. Hierdurch wird auch die Auswahl an Sensoren festgelegt, deren Nachrichten es als relevante Warnungen bewertet.

Geteilter Zufall, "Common Randomness", der Post-Shannon kodierten Nachrichten:
Die Methode der Post-Shannon Kodierung erreicht eine bessere Effizienz
- im Sinne von, dass mehr Nachrichten pro Kanalkapazität übertragen werden können - wenn gemeinsame Zufallszahlen für die Kodierung verwendet werden, die zuvor an die unterschiedlichen Netzwerkknoten verteilt werden. Netzwerkknoten können, die Endgeräte, die Sensoren, die Warngeräte etc. sein. Die Begriffe Netzwerkeinheiten und Netzwerkknoten sind in der vorliegenden Anmeldung als Synonyme zu verstehen. Post-Shannon Kodierung ist allerdings auch mit einer deterministischen Kodierung möglich.
- Gemeinsamer Seed: Man stelle sich vor, dass sowohl der Sender als auch der Empfänger Zugang zu einem Seed als einem zufälligen "Schlüssel" haben, der es ihnen ermöglicht, die Nachricht auf eine neue Weise zu interpretieren. Diese gemeinsame Zufälligkeit erschließt zusätzliche Informationen, die nicht direkt übertragen werden können/müssen.
- Neue Protokolle: Durch die Einbeziehung des Seeds ermöglicht die Post-Shannon-Kommunikation neuartige Protokolle, die effizienter sind als herkömmliche deterministische Methoden.

Ein einfaches Beispiel: auf zwei verschiedenen Netzwerkknoten liegt jeweils dieselbe Identifikations-Nachricht und ein gemeinsamer Satz an Seeds vor und es ist die Aufgabe auf beiden Netzwerkknoten die Nachricht gleich, aber auch zufällig zu verschlüsseln. In diesem Fall reicht es aus, wenn ein Netzwerkknoten an den anderen lediglich die Position der Zufallszahl aus dem Satz von Zufallszahlen mitteilt, auf der die Verschlüsselung basiert.

Konkreter für den Anwendungsfall der Erfindung, wobei nachfolgend der Sender als Alice und der Empfänger als Bob bezeichnet wird:
1. Wir betrachten einen Kanal von Alice zu Bob, der Buchstaben aus dem Alphabet A überträgt, mit zusätzlichem Rauschen. Alice sendet Blöcke der Länge n, d.h. eine Nachricht x von Alice wird in Codewörter der Länge n kodiert.
2. Alice sendet also eine Nachricht/Ereignis x, Bob hat (=interessiert sich für) die ebenfalls kodierte Nachricht y vorliegen. Am Ende will Bob wissen, ob x = y ist oder nicht - er will also "nur" identifizieren.
3. Alice sendet Daten, die x lediglich kennzeichnen, also z.B. einen Tag, der spezifiziert, dass x an einer Stelle i einen bestimmten Wert (i) aufweist an Bob und Bob testet statistisch, ob wahrscheinlich x = y gilt. Er kann ja überprüfen, ob seine Nachricht y an der Stelle i den Wert (i) aufweist. Dafür gibt es mehrere Möglichkeiten, z.B.:
   3a) einen normalen, deterministischen Übertragungscode, denn wenn Bob den Code kennt, weiß er, ob x = y. Damit ist es möglich aus M = 2^{nC} vielen Nachrichten auszuwählen (wenn C die Kanalkapazität ist). Die ist also die beste erreichbare Übertragungsrate für diesen Fall.
   3c) einen optimierten Code für Identifikation als randomisierter Identifizierungscode mit basierend auf einem Seed S. Damit kann man aus ca. 2*^{M}* = 2^{2*n*C*}vielen Nachrichten auswählen. D.h. die stochastische Codierung ist viel effizienter. Wenn die Zufallszahlen, die zur Codierung genutzt werden, vorher Alice und Bob bekannt sind (common randomness), z.B. L Zufallsbits, dann ist es möglich aus ca. 2^{2*L*} vielen Nachrichten auszuwählen: Die Codekonstruktion kann beschreiben werden als ein "Hashen" der Nachricht und der Zufallszahl, und dann Übertragen allein des Hashwertes.

Bei 3c) hilft der Zufall aus folgendem Grund zur Erhöhung der Effizienz: Wenn deterministisch kodiert wird, z.B. ist ein Codewort a(x), dann gilt für x ≠ y entweder a(x) = a(y) oder a(x) ≠ a(y), die Codewörter kollidieren also entweder immer, wenn (x, y) kodiert wird oder nie. Wenn sie immer kollidieren, dann ist die Fehlerwahrscheinlichkeit für (x, y) gleich 1.

Es ist aber gefordert, dass die Fehlerwahrscheinlichkeit klein ist. Daher können im deterministischen Fall nur höchstens so viele Nachrichten wie Codewörter existieren, die Codierung muss also umkehrbar sein.

Wenn aber "a" eine Zufallsfunktion ist, dann kann für die Wahrscheinlichkeit *Pᵣ*(*a*(*x*) *= a*(*y*)) ≤ *ε* für alle x ≠ y gelten, obwohl es mehr Nachrichten als Codewörter gibt.

Die Fehlerwahrscheinlichkeit, also die Wahrscheinlichkeit so einer Kollision, ist dann die Wahrscheinlichkeit, dass die Hashes h(x, S) und h(y, S) gleich sind, wobei S der Seed ist. Die Identifikations-Nachricht kann also mittels h(x, S) identifiziert werden, indem der Empfänger die hash-Funktion h mit dem Seed S auf alle in ihm hinterlegten Nachrichten anwendet und prüft, ob das Ergebnis gleich oder ungleich h(x, S) ist. Ist das Ergebnis für eine Nachricht h(x, S) kann er schauen, was in der Nachricht x als Information steht. Die Codierung ist nicht mehr umkehrbar, es kann also nicht x aus a(x) berechnet werden. Aber der Empfänger kann überprüfen, ob er denselben Hash-Wert rausbekommt, wie der Hashwert (der quasi der "Tag" ist), der ihm von Alice übermittelt wurde. Daher kann die Nachrichtenmenge größer als die Codewortmenge sein. Die Hash Funktion h(), insbesondere mit dem Seed S h(x, S), ist eine mögliche Ausführungsform des randomisierten Identifikationscodes.

Die miteinander kommunizierenden Endpunkte, also Sender und Empfänger, benötigen denselben Seed S als gemeinsames "Codebook, bzw. als gemeinsame Referenztabelle, damit der Empfänger weiß mit welchem Seed S die Nachricht von dem Sender codiert wurde. Dabei muss der, insbesondere räumlich verteilte Seed S nicht notwendigerweise geheim bleiben und unterliegt somit keiner besonderen Schutzanforderungen. Der Sender muss also an den Empfänger sowohl den Hashwert h als auch den Seed S übertragen oder der Empfänger muss über einen anderen Weg erfahren, welcher Seed S verwendet wurde - z.B. durch Beobachtung eines gemeinsamen Zufallsexperimentes. Damit kann die Nachricht identifiziert werden. Der Sender kann dann nämlich beispielsweise auf die Nachricht x ebenfalls die Hashfunktion mit dem Seed S anwenden und prüfen, ob ebenfalls der Hashwert h als Ergebnis herauskommt. In diesem Fall wurde erfolgreich infiziert, dass der Sender die Nachricht x gesendet hat. Der Hashwert h ist also gewissermaßen der "Tag", der die Post-Shannon-Nachricht charakterisiert.

Die Verteilung des Seeds kann über die vorstehend genannten Kommunikationsnetzwerke und/oder über eine Kombination der entsprechenden Netzwerke erfolgen, indem die Zufallszahlen einer Entropiequelle, zum Beispiel eines (Q)-RNG (Quanten Zufallgenerators), (T)-RNG (True Random Number Generators) oder eines bestimmten Zufallexperiments (zum Beispiel Aufnahme und Digitalisierung atmosphärischen Rauschen, die Bewegung eines Festplattenkopfes beim Auslesen zufälliger Datenstrukturen, die Aufnahme des Rauschens eines physikalischen Kommunikationskanals) an die beteiligten Netzwerkeinheiten, also insbesondere an die Sender und die Empfänger aber auch an Basisstationen, versendet werden. Die Sender sind hierbei insbesondere Sensoren, die Empfänger Nutzerendgeräte, wie Smartphones oder die Warngeräte. Die Verteilung kann über ein Mobilfunknetzwerk, insbesondere zu Zeiten niedrigerer Netzwerkauslastung, an die Sensoren und/oder die Endgeräte erfolgen. Mobile Nutzerendgeräte können mit den entsprechenden Zufallszahlen eines bestimmten Überwachungsbereichs und/oder einer Region und insbesondere auch mit den möglichen Nachrichten dieses Überwachungsbereichs und/oder der Region während eines Handover-Prozesses in eine Mobilfunkzelle innerhalb dieses Überwachungsbereichs und/oder der Region versorgt werden. Hierdurch wird sichergestellt, dass das Endgerät zielgerichtet nur dann mit den notwendigen Daten des entsprechenden Überwachungsbereichs und/oder der Region versorgt wird, wenn sich der Nutzer, dem das Endgerät zugeordnet ist, auch in dementsprechenden räumlichen Gebiet aufhält. Wie vorstehend schon beschrieben, die Seeds können in dem Ringspeicher abgespeichert werden.

Alternativ können die Sensoren die Seeds und/oder die Identifikationscodes über das Peer-to-Peer-Netzwerk weiterleiten, sodass alle Beteiligten Empfänger und/oder Sender dieselben Seeds zur Ausführung des Post-Shannon Protokolls besitzen. Insbesondere kann ein zentrales Warngerät die Zufallszahlen empfangen und über das Peer-to-Peer-Netzwerk an die Sensoren weiterleiten. In dem Falle des Peer-to-Peer-Netzwerks genügt es, wenn ein einziger Sensor eine Verbindung zu dem Zufallsgenerator etabliert und die entsprechende Zufallszahl an die übrigen Sensoren weiterleitet. In einer bevorzugten Ausführungsform werden die Zufallszahl regelmäßig ausgetauscht und/oder neu erzeugt und verteilt. Der technische Vorteil ist hierbei der regelmäßige Austausch der Protokollgrundlage. Dann können neue Geräte leichter in das Netzwerk aufgenommen werden, bei Fehlfunktionen einzelner Sensoren kann ein sogenannter "Clean Slate" gemacht werden.

Eine Menge des notwendigerweise zu verteilenden Seeds lässt sich aus dem doppelten Logarithmus der Anzahl der möglichen Sensoren abschätzen: log(log(10¹³)) und ergibt circa 6 Bits an gemeinsamen Zufall, wobei 10¹³ der angenommenen Gesamtanzahl von möglichen Sensoren entspricht, wobei die Anzahl (wie der Fachmann einfach erkennt) angepasst werden kann, indem die tatsächliche aktuelle Gesamtanzahl der Sensoren verwendet wird. Unter dem notwendigerweise zu verteilenden Zufall versteht man die Bedingungen, dass jeder Sensor mittels seiner identifizierbaren Nachricht eindeutig identifizierbar sein soll. Der Empfänger kann also die Frage beantworten: stammt die per Broadcast empfangene Identifizierungs-Nachricht von einem bestimmten Sensor. Dies wiederum hat zur Folge, dass die Anzahl der eindeutig identifizierbaren Nachrichten auf dem Endgerät, insbesondere dem Warngerät, des Nutzers ebenfalls vorliegen müssen. Dies kann dadurch realisiert werden, dass jedes Nutzerendgerät bei einem Handover in eine neue Empfangszelle und/oder beim Anschalten mit den entsprechenden 6 Bits an definierten Zufallszahlen versorgt werden muss. Prinzipiell ist es auch möglich verschiedene Gefahrenbereiche zu definieren und die Sensoren dieser Gefahrenbereiche jeweils mit Teilmengen der 6 Bits an definierten Zufallszahl zu versorgen und den Endgeräten beispielsweise bei einem Handover in die entsprechenden Funkzellen der Gefahrenbereiche jeweils lediglich diese Teilmenge der 6 Bits an definierten Zufallszahl zu übertragen, wodurch der Datenverkehr reduziert wird.

Die definierten Zufallszahlen, insbesondere die Gesamtmenge an 6 Bits, können in Form eines standardisierten Daten-Feldes während des Einbuchungsprozesses bzw. des Handover-Prozesses oder beim Einschalten des Endgeräts und/oder des Warngeräts versendet werden.

Wird angenommen, dass jeder Sensor pro Tag maximal 100 Nachrichten senden können sollte, so kann das Netzwerk an jeden der 10⁶ Sensoren 6 zufällige Bits pro zu sendender Nachricht pro Tag provisionieren. Hierbei wurde angenommen, dass in einem bestimmten Gefahrengebiet 10⁶ Sensoren vorgesehen sind. Soll genug Zufall ca. 100 Nachrichten zur Verfügung stehen, so kann das Netzwerk an die Sensoren eine Gesamtdatenvolumen von 600 Mbit, insbesondere pro Tag, provisionieren. An jeden einzelnen Sensor werden also in diesem Fall nur 600 Bit übertragen.

Eine weitere Reduzierung dieses Gesamtdatenvolumen kann dadurch erzielt werden, wenn es nicht mehr darauf ankommt, von welchem Sensor eine entsprechende Gefahrenmeldung kommt, sondern, ob überhaupt eine Gefahrenmeldung versendet wurde. Auf diese Weise könnten beispielsweise 1000 Sensoren, die einen Wasserpegel detektieren, zusammengefasst werden, wobei das Endgerät jeweils nur die Nachricht interessiert "Gefahrenmeldung: ja oder nein". Natürlich könnte diesem Fall dann allerdings nicht mehr identifiziert werden, von welchem Sensor die Nachricht tatsächlich kommt. Das Gesamtdatenvolumen reduziert sich in diesem Beispiel auf 0,6 Mbit.

Wie schon vorstehend angedeutet, benötigen die Endgeräte, insbesondere die mobilen Endgeräte, dieselben Zufallszahlen wie sie der entsprechende Sensor verwendet, insbesondere, wenn die Endgeräte in das (beispielhafte) Gefahrengebiet eintreten. Ist die beispielhafte Anzahl von Nutzern in dem Gefahrengebiet 10.000, so kann das Netzwerk eingerichtet sein dieselben Zufallszahlen jedem der 10.000 Nutzer, also wiederum die 600 Mbit, zu übertragen. Die 600 Mbit können bevorzugt täglich und insbesondere zu verkehrsarmen Zeiten des Datennetzwerks provisioniert werden. Insbesondere, wenn das entsprechende Endgerät in das Gefahrengebiet eintritt oder beim Einschalten des Endgeräts.

Die Menge an Zufallszahlen dürfte zu groß sein, als dass diese in der SIM Karte des Endgeräts gespeichert werden können. Daher kann der Hauptspeicher in den Endgeräten entsprechend genutzt werden oder es können spezielle SIM Karten mit größerem Speicher bereitgestellt werden.

Die Gesamtmenge an Daten, die also für einen bestimmten Zeitraum vom Kommunikationsnetzwerk übertragen werden sind 600 Mbit + 10.000 * 600 Mbit = 6,001*10⁶ Mbit.

Die Anzahl der Daten, die an die Endgeräte, also insbesondere die Smartphones der Nutzer übertragen wird, kann in vorteilhafterweise dadurch reduziert werden, indem zwei verschiedene Teil-Systeme zum Weiterleiten der Nachrichten in einer Variante A) oder einer Variante B) eingerichtet werden.

### Variante A):

Für die beiden Teilsysteme wird insbesondere jeweils ein anderer Zufall, z.B. aus einem neuen Zufallsexperiment, verwendet.

Teilsystem 1 (mit den vorstehend verwendeten Zahlenbeispielen):
Das Teilsystem 1 umfasst 10⁶ Sensoren und 10 (zentrale) Warngeräte in der Region. Die Anzahl N_{Warn} = 10 der Warngeräte kann z.B. aus Redundanzgründen oder falls eine andere örtliche Auflösung erwünscht ist, variiert werden. Hierbei wird angenommen, dass in einem bestimmten Gefahrengebiet 10⁶ Sensoren vorgesehen sind. Soll genug Zufall für 100 Nachrichten zur Verfügung stehen, so kann das Netzwerk an die Sensoren ein Gesamtdatenvolumen von 600 Mbit an Zufall versenden. Das Gesamtvolumen der Daten ist also Menge des Zufalls*Anzahl der Nachrichten*Anzahl der Sensoren = 6Bit*100*10⁶= 600 Mbit. Die Sensoren senden in Teilsystem 1 aber nicht direkt an die Endgeräte, sondern an die zentralen Warngeräte, z.B. innerhalb des Peer-to-Peer Netzwerks. Die Warngeräte können einzelne Sensoren sein und/oder auch eine Basisstation. Die Warngeräte erhalten dann ebenfalls jeweils die 600 Mbit an Zufall. Insbesondere kann ein auf den Warengeräten implantierter Algorithmus auf Grundlage der erhaltenen Nachrichten auswerten, ob eine Gefahrensituation vorliegt, die weitergeleitet werden soll. Die Gesamtdatenmenge in Teilsystem 1 ist also: 10*600 Mbit = 6000 Mbit.

Teilsystem 2: Das Teilsystem umfasst die 10.000 Nutzerendgeräte in dem Gebiet und die 10 Warngeräte. Die Nutzerendgeräte müssen in diesem zweiten Teilsystem nur noch die Nachrichten der 10 Warngeräte identifizieren. In diesem Sinne leiten die Warngeräte also nicht die Nachrichten der Sensoren weiter, sondern senden ihre eigenen Post-Shannon Nachrichten, die dann wiederum von den Endgeräten identifiziert werden. Das Gesamtvolumen der Daten ist also Menge des Zufalls * Anzahl der Nachrichten*Anzahl der Sensoren = 6Bit*100*10 = 6000 Bit. Diese müssen aber an jedes einzelne der 10.000 Nutzerendgeräte übertragen werden. Die Gesamtdatenmenge in Teilsystem 1 ist also 6000 Bit* 10000 = 60 Mbit.

Die Gesamtmenge an Daten, die also für einen bestimmten Zeitraum übertragen werden, wenn die Variante mit den zwei Teilsystemen verwendet wird, ist 6060 Mbit.

Zusätzlich zu den Zufallszahlen können den Endgeräten die möglichen Nachrichten und ein entsprechendes Mapping zu den Zufallsblöcken zur Verfügung gestellt werden. Beispiel: der 600Mbit Block (im Fall der zwei Teilsystem der 6000 Bit Block) an Zufall im Katastrophengebiet xy triggert die folgende Warnmeldung: Achtung Hochwassergefahr! Bitte verlassen Sie unmittelbar ihre Häuser und begeben Sie sich in Sicherheit!".

Die Blöcke an Zufallszahlen können für jeden Sensortyp und für jedes Gefahrengebiet separat vergeben werden.

In der Variante B) wird im Unterschied zu Variante A) nur an das erste Teilsystem der Seed bereitgestellt, und nur innerhalb des ersten Teilsystems werden die Warnnachrichten als Post-Shannon Nachricht versendet und innerhalb des zweiten Teilsystems als klassische Nachrichten von dem zumindest einen Warngerät an die Nutzerendgeräte. In dieser Variante ist es möglich, existierende Lösungen wie Cell Broadcast zu nutzen.

Das erfindungsgemäße Verfahren kann durch eine Kombination der nachfolgend beschriebenen Schritte durchgeführt werden. Wenn im Zusammenhang dieser Erfindung davon gesprochen wird, dass die Sensoren Nachrichten versenden, handelt es sich eben lediglich um Post-Shannon-Nachrichten. Deswegen werden diese Nachrichten auch als Identifikations-Nachrichten bezeichnet.
i) Verteilung der entsprechenden Seeds an die Sensoren, Warngeräte und/oder die Endgeräte, wobei die Endgeräte zumindest dieselben Zufallszahlen wie ein bestimmter Sensor oder ein Warngerät erhalten müssen, wenn eine Identifikations-Nachricht dieses bestimmten Sensors identifiziert werden soll.
ii) Broadcasting von Identifikations-Nachrichten der Sensoren, insbesondere von auffälligen Messwerten der Sensoren, insbesondere als Hash-Werte der entsprechenden Identifikations-Nachrichten. Der Empfänger kann basierend auf seinen Seeds testen, ob als Ergebnis denselben Hash-Wert berechnen kann und falls dies der Fall ist, feststellen, dass er eine Nachricht von dem Sensor bekommen hat. Im Fall eines Alarms (beispielsweise Lawinenabgang in einem Skigebiet, hohe Wellenbewegungen vor der Küste, seismische Aktivitäten) schicken die Sensoren Identifikations-Alarmnachrichten auf einem Broadcast-Kanal in alle verbundenen Netzwerke (Mobilfunknetze, Satellitennetze, Wi-Fi Mesh). Jeder Sensor, der eine entsprechende Aktivität misst, kann eine Nachricht senden. Bei der angenommenen sehr großen Anzahl von Sensoren auf einem Berghang, der Meeres- oder der Erdoberfläche entsteht sozusagen ein "Sturm" an Broadcast-Identifikations-Nachrichten. Die Nachrichten werden als Post-Shannon Identifikationsnachrichten an alle Endgeräte und/oder Warngerät dem Netzwerk gesendet mit dem Ziel, die entsprechendem Nutzer im Bereich der unmittelbaren Gefährdung zu erreichen und zu warnen.
iii) Erkennen und Testen der Identifikations-Nachrichten vermittels der Endgerät und/oder der Warngeräte: die Endgeräte und/oder die Warngeräte, insbesondere in der geographischen Gefahrenzone, identifizieren die Alarmmeldung beispielsweise mit der Frage "wurde mir gerade eine Alarmnachricht gesendet, die sich auf meine geographische Position bezieht?". Identifiziert das Endgerät oder das Warngerät mehr als W Identifikations-Nachrichten eines bestimmten Typs pro Zeiteinheit, so stellt ein auf dem Endgerät und/oder dem Warngerät implementierte Algorithmus fest, dass eine Gefahrensituation vorhanden ist und kann den Nutzer durch eine entsprechende Warnmeldung, insbesondere durch visuelle und/oder optische Nachrichten, informieren.

Selbst eine gewisse "Unzuverlässigkeit", also Falschmeldungen, der versendeten Identifikations-Nachrichten kann durch die insgesamt hohe Anzahl der übersendeten Nachrichten kompensiert werden, sodass insgesamt dennoch eine hohe Zuverlässigkeit des Gesamtsystems erreichbar ist: Bei einer Fehlerwahrscheinlichkeit P jeder Nachricht und N vielen empfangenen Nachrichten beträgt die Wahrscheinlichkeit, dass weniger als W Nachrichten richtig getestet werden *Pₑ* ≤ (*N - W*) * *P.*

Wenn kein Warnfall eingetreten ist, bedeutet ein Fehler, dass trotzdem eine Warnung gesendet wird. Die Wahrscheinlichkeit einer Fehlwarnung an für jeden Sensor als 0.01 an angenommen werden und die Empfindlichkeit des Empfängers als W = 0.1 *N, sodass in diesem Fall *Pₑ* ≤ (*N - W*) * *P* = 0,01 * 0,9 = 0,009. Im Falle einer echten Warnung bedeutet ein Fehler, dass die gesendete Identifikations-Nachricht mit irgendeiner anderen Identifikations-Nachricht kollidiert (d.h. dieselben Ressourcen beansprucht; dann kann angenommen werden, dass beide Identifikations-Nachrichten unverständlich sind). Es kann angenommen werden, dass in einem Zeitintervall T = 1/100 s ein Block pro Ressource gleichverteilt zufällig ausgewählt werden kann. In dem Fall ist die Fehlerwahrscheinlichkeit $\begin{matrix}P = \left〈Sensorzahl Pro Zelle\right〉 * {\left(\left〈Bitzahl pro Nachricht\right〉/\left(\left〈\begin{matrix}Bitzahl pro \\ Symbol\end{matrix}\right〉*\left〈Symbolrate\right〉*T\right)\right)}^{2} = \\ = \left〈Sensorzahl Pro Zelle\right〉 * {\left(\left〈Bitzahl pro Nachricht\right〉/\left(\left〈\begin{matrix}Bitzahl pro \\ Symbol\end{matrix}\right〉*\left〈Anzahl Subcarrier\right〉*\left〈Subcarrier spacing\right〉*\left〈\begin{matrix}Anzahl MIMO - \\ Keulen\end{matrix}\right〉*\left〈Anzahl Frequenzbänder\right〉*T\right)\right)}^{2} = \\ = \left〈Sensorzahl Pro Zelle\right〉 * {\left(2*log2\left(\left〈Anzahl Empfänger\right〉*\left〈\begin{matrix}Sensorzahl \\ im Gefahrenbereich\end{matrix}\right〉\right)/\left(\begin{matrix}8 Bit / phys . Symbol * 1 / 2 \left[Übertragungsrate\right] * 12 \\ * 30000 Symbole / s \left[Subcarrier spacing\right] * 59 \left[MIMO-Keulen\right] * 245 \\ \left[Frequenzbänder\right] * T\end{matrix}\right)\right)}^{2} = \\ = {10}^{7} * {\left(2*log2\left(10000*{10}^{7}\right) Bit/\left(20 Gbit/s*0,01 s\right)\right)}^{2} = \\ = 22 / 20 * log 2 \left(10\right) * {10}^{- 7} = \\ < = {10}^{- 6} .\end{matrix}$

D.h. es folgt insgesamt, Pₑ <= 10⁻⁶ * 0,9.

Die Wahrscheinlichkeit, dass bei irgendeinem Empfangsgerät in der Zelle ein Fehler auftritt ist somit immer noch kleiner als 10000*0.9*10⁻⁶ = 1/50. Bei Bedarf kann die Zahl der Sensoren auf einen pro 10*10 m² reduziert oder das Zeitintervall auf T = 1/10 s verlängert werden, um die Fehlerwahrscheinlichkeit anzupassen.

Bevorzugt benötigt das Verfahren also eine gemeinsame Netzwerkverbindung zwischen Sensoren und mobilen Endgeräten. Dies lässt sich beispielsweise über eine gleichmäßige Verteilung der Verbindung der Sensoren auf die verfügbaren Netzwerke realisieren, d.h. bei M Sensoren sind jeweils M/3 mit dem Mobilfunknetzen 1, 2 und 3 verbunden. Multi-SIM Sensoren wären eine andere Realisierungsmöglichkeit oder es wird eine Aggregationsstation wie das Warngerät benötigt, die die technische Schnittstelle aus dem Sensornetzwerk in die verschiedenen Funknetzwerke realisiert. Letztere wäre dann Teil eines Funknetzwerks mit der Autorisierung, einen Zellen-Broadcast in allen Zellen der angeschlossenen Funknetzwerke durchzuführen.

Das erfindungsgemäße Verfahren verlagert einen Großteil des Kommunikationsaufwands zu dem Empfänger, also insbesondere zu dem Endgerät des Nutzers. Sollen die Endgeräte "ständig" nach eintreffenden Warnmeldungen auf dem Broadcasting Kanal lauschen, so kostet dieses Verhalten permanent Energie. Um den Energieverbrauch zu minimieren, könnten netzseitige Aggregatoren, insbesondere die zentralen Warngeräte, eingesetzt werden, die dauerhaft auf die Sensorsignale "hören". Netzseitige Aggregatoren sind Empfänger, die den Broadcastingkanal abhören, aber mit Stromverbindung, insbesondere inklusive einer Notstromversorgung, zur Energieversorgung verbunden sind. Sollten die zentralen Warngeräte aufgrund einer Warnmeldung auslösen, so könnten die Warnmeldungen wiederum mittels Post-Shannon Nachrichten und/oder auf konventionellen Weg z.B. über eine WarnApp im Mobilfunknetzwerk verteilt werden und auch entsprechend Behörden informiert werden. Diesen zentralen Warngeräten kann dauerhaft eine bestimmende Netzwerkschicht zugeordnet werden, sodass deren Kommunikationsfähigkeit auf jeden Fall sichergestellt ist.

Einer alternativen Variante, können die Endgeräte dazu eingerichtet sein lediglich in bestimmten zeitlichen Abständen, beispielsweise einmal pro alle 5 Sekunden oder einmal pro Minute nach den entsprechenden Broadcast-Identifikations-Nachrichten zu lauschen. Die Sensoren können insbesondere eingerichtet sein mehrmals innerhalb dieser Zeiträume zu senden, sodass sichergestellt wird, dass keine gesendete Alarm-Identifikations-Nachricht "verloren geht".

Das Verfahren hat also den Vorteil, dass alle Sensoren senden, und dass es keinen "single point of failure" gibt, bei dessen Ausfall keine Warnmeldungen mehr übertragen werden können. Das Verfahren bietet eine sehr geringe Fehler-/Kollisionswahrscheinlichkeit der Warnnachrichten. Das Verfahren bietet eine erhöhte Effizienz bzw. eine geringere Latenz als bekannte Verfahren im Stand der Technik. Es sind sehr hohe erreichbare Mengen an Nachrichten möglich. Das Verfahren ist auch kompatibel und anwendbar auf existierende Broadcast Techniken.

Aufgrund der spektralen Effizienz der Post-Shannon Kodierung sind diese Identifikations-Nachrichten quasi netzneutral, d. h. auch bei einer sehr ausgelasteten oder gestörten Netzsituation lassen sich diese Identifikations-Nachrichten übermitteln. Das Verfahren kann eingerichtet sein, dass nur die Endgeräte, die sich im Umfeld der kodierten geographischen Position befinden, die Identifikations-Nachricht als Alarmmeldungen identifizieren und den Benutzer entsprechend informieren, wohingegen alle anderen Endgeräte nicht reagieren. Der inhaltliche Teil der Nachricht könne beispielsweise als klassische Nachricht über das Netzwerk nachgeliefert werden (K-Identifikation).

Das Verfahren ermöglicht es zudem einen signifikanten Zeitvorteil zu bisherigen Alarmierungssystemen zu erzielen, der eventuell wichtig ist um Leben vor einer unmittelbaren Gefahr zu retten. Zudem ermöglicht das Verfahren eine sehr effiziente Alarmierung aus einem Lagezentrum heraus, wenn dieses Lagezentrum mit dem Warngerät in einer Datenverbindung steht. In den Lagezentrum können zudem auf Computern Algorithmen implementiert sein, die die Sensordaten auswerten und die Gefahr genauer analysieren können. Diese Algorithmen können beispielsweise auf einer künstlichen Intelligenz (KI) beruhen, die mit analogen Ereignissen aus der Vergangenheit und den entsprechenden Resultaten trainiert wurden und daher basierend auf den Identifizierungs-Nachrichten eine Gefahrenvorhersage treffen kann. Wird beispielsweise von einem Lagezentrum die Gefährdung der Bevölkerung festgestellt, zum Beispiel durch einen militärischen Angriff (in diesem Fall sind die Sensoren Radarstationen), ein Abstürzen eines Flugzeug (in diesem Fall sind die Sensoren Flugüberwachungssensoren), ein Ausbrechen der Vulkan, eine Bootskatastrophe mit austretendem Öl, ein Knie oder ein Nuklearunfall, so lässt sich die Bevölkerung über Broadcasting vermittels der Funkzellen von Telekommunikationsanbietern mittels Identifikations-Nachrichten effizient waren, insbesondere, wenn die KI feststellt, dass die Wahrscheinlichkeit einer Gefahr über einem anpassbaren Schwellenwert liegt, wobei der Schwellenwert für verschiedene Gefahrentypen und/oder räumliche Gebiete unterschiedlich festlegbar ist. Hierdurch kann erreicht werden, dass nicht unnötig oft gewarnt wird (was Ressourcen schont), aber gleichzeitig, dass bei besonderes kritischen Ereignissen auf jeden Fall gewarnt wird. Bei einer Überflutung kann dadurch z.B. erreicht werden, dass Bewohner deren Häuser "tiefer" liegen früher gewarnt werden als Bewohner deren Häuser höher liegen.

Das Verfahren ermöglicht die Verwendung eines geographischen Koordinatensystems, welches jeden Punkt der Erde eindeutig spezifiziert es kann jedem Sensor eine eindeutige geographische Position zugeordnet werden, sodass das Endgerät feststellen kann, ob es sich überhaupt in dem Gefahrengebiet der Identifikation-Nachricht des Sensors befindet.

Wie schon zuvor erwähnt, der beschriebene Anwendungsfall für eine Alarmsituation erfüllt die Bedingungen der Post-Shannon K-Identifikation:
a) es gibt viele Nachrichten, nämlich alle geographische Koordinaten, die diskret qualifiziert werden;
b) es gibt wenige Netzteilnehmer (ca. N = 10⁴), die gleichzeitig Nachrichten empfangen und prüfen ob das Gefahrengebiet betroffen ist, sodass es sich interessieren;
c) die Anzahl der Nachrichten in den betroffenen Gefahrengebiete sind klein im Vergleich zur Gesamtanzahl der Nachrichten;
d) daher ist die Zahl der Nachrichten auf die gleichzeitig getestet wird, klein im Vergleich mit der Gesamtzahl an Nachrichten;

Die folgenden Vorteile einer Post-Shannon'schen K-Identifikationslösung werden ausgenutzt:
Durch die Einsparung an Kanalkapazität kann jede Nachricht in einem kleinen Zeitraum übertragen werden. Auch die Zahl der lokal relevanten Sensoren ist relativ klein, da sie auf das Gefahrengebiet beschränkt ist, und auf gelegentliche Fehlsendungen. Daher stört das Warnnetzwerk das reguläre Mobilfunknetz nicht wesentlich.

### Weitere Vorteile sind:

Durch die dezentrale Infrastruktur gibt es keinen Single Point-of-Failure, wie bei bisherigen Warnsystemen: Da im Ahrtal Sirenen ausfielen, wurden manche Orte nicht rechtzeitig gewarnt. Wenn bei der hier beschriebenen Kommunikationslösung ein Sensor nicht warnt, werden weiterhin Warnungen von einigen/vielen anderen Sensoren empfangen. Falls ein Endgerät ausfällt, ist nicht ein ganzer Ort betroffen, sondern nur einzelne Personen, die häufig durch ihre Umgebung gewarnt werden.

Access / Interferenzen im Netzwerk:-> eine Erdbebenwelle (3 -4 km/s), ein Tsunami (0,2 km/s), eine Flut (0,001 km/s) lassen die Sensoren nacheinander auslösen und senden.

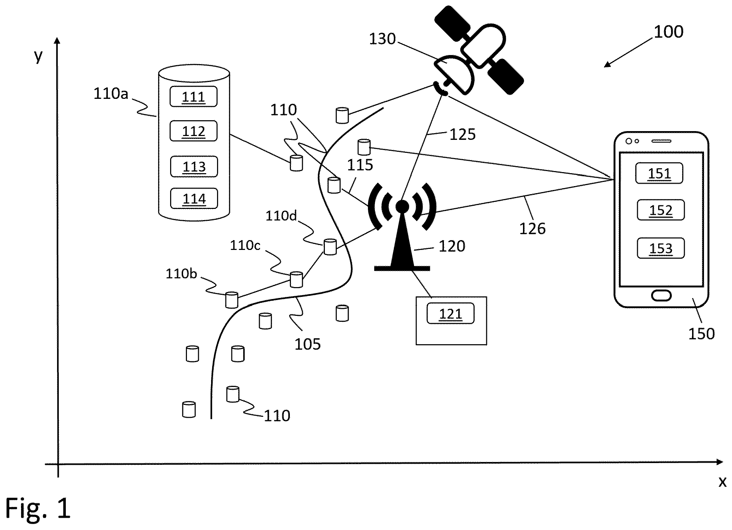

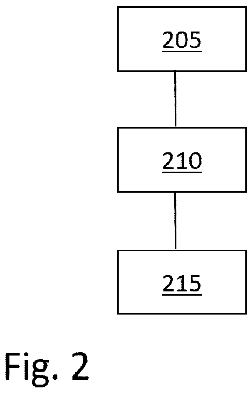

Fig. 1 ein erfindungsgemäßes Kommunikationssystem 100, dass eingerichtet ist ein erfindungsgemäßes Verfahren 200 gemäß Fig. 2 auszuführen. Bevorzugt werden die Schritt genau in der nachstehend beschriebenen Reihenfolge ausgeführt.

Das Verfahren 200 umfasst die Schritte:
Schritt 205: Bereitstellen zumindest eines Sensors, insbesondere eine Mehrzahl von Sensoren, in einem Gebiet, wobei das Gebiet ein potentielles Gefahrengebiet ist;
Schritt 210: Messen von einem Umgebungsparameter durch den zumindest einen Sensor in dem Gebiet, wobei der Umgebungsparameter geeignet ist eine Gefahrensituation zu charakterisieren;
Schritt 215: Absenden einer Warnnachricht durch zumindest den einen der Sensoren, wobei die Warnnachricht als eine Post-Shannon Nachricht ausgebildet, wobei die Post-Shannon Nachricht mit einem Identifizierungscode kodiert ist.

Fig. 1 zeigt einen Fluss 105, der durch ein potentielles Gefahrengebiet verläuft, falls dieser Fluss über die Ufer tritt. Die geografische Lage des Gebiets ist durch die X-Y Koordinaten gekennzeichnet, die der geographischen Länge und Breite entsprechen können. Entlang des Flusses sind Sensoren 110 vorgesehen, die die Umgebungsparameter messen, um eine Gefahrensituation feststellen zu können. Die vergrößerte Ansicht eines Sensors 110a zeigt, dass der Sensor hierzu ein entsprechendes Messmodul 111, ein Sensorrechenmodul 112 und ein Sensor-Sende-Modul 113 aufweist. Anstelle des Sensor-Sende-Moduls 113 können einzelne oder auch alle Sensoren 110 ein Sensor-Transceiver-Modul 114 aufweisen, wobei es das Sensor-Transceiver-Modul 114 insbesondere möglich, dass die Sensoren 110 untereinander eine Peer-to-Peer Netzwerk aufbauen und dadurch miteinander kommunizieren und/oder Warnnachrichten weiterleiten können. Exemplarisch ist hierzu gezeigt, wie das Peer-to-Peer Netzwerk zwischen den Sensoren 110b-d ausgebildet ist, wobei der Sensor 110d die war Nachricht an eine Basisstation 120 weiterleitet.

Die Basisstation 120 kann eine spezielle Ausführungsform des Warngerätes zum Warnen vor Gefahrensituationen in dem Gefahrengebiet sein, wobei die Basisstation 120 zumindest eine Post-Shannon Nachricht eines Sensors 110 insbesondere als Broadcast Signal 115 erhalten kann und diese an einen Satelliten 130 mittels eines ersten Funksignals 125 und/oder an ein Nutzerendgerät 150 mittels eines zweiten Funksignals 126, wobei das zweite Funksignal 126 insbesondere einem 5G oder einem 6G Standards entspricht, weiterleiten kann. Die Basisstation 120 kann ein Warngerät-Transceiver-Modul 121 aufweisen, wobei das Warngerät-Transceiver-Modul 121 eingerichtet ist kodierte Post-Shannon Warnnachricht von den Sensoren 110 zu Empfangen und an das Nutzerendgerät 150 weiterzuleiten. Das Nutzerendgerät 150 kann die Warnnachricht auch direkt von einem Sensor und/oder von dem Satelliten 130 gesendet bekommen.

Das Nutzerendgerät 150 weist auf ein Nutzerendgerät-Empfangsmodul 151 eingerichtet zum Empfangen einer kodierten Post-Shannon Warnnachricht; ein Nutzerendgerät-Rechnermodul 152 eingerichtet um einen Identifizierungscode abzuspeichern und um die kodierte Post-Shannon Warnnachrichten auf Basis des Identifizierungscode zu identifizieren, wobei eine Warnmeldung an den Nutzer ausgegeben wird, wenn eine Warnung für das Gebiet festgestellt wird. Hierzu kann das Nutzerendgerät Mittel zum Bekanntmachen der Warnmeldung 153 aufweist. Beispielsweise sind die Mittel der Warnmeldung 153 ein Display und/oder ein Lautsprecher.

Dadurch, dass die Warnnachrichten als Post-Shannon Nachrichten versendet werden und von dem Empfänger nur noch identifiziert werden müssen, können in einer Gefahrensituation sehr effizient eine große Menge an Warnnachrichten versendet werden, da die Post-Shannon Nachrichten im Gegensatz zu herkömmlichen Nachrichten nur ein Bruchteil an Datenmenge aufweisen. Zudem wird dadurch erreicht, dass mit einer geringen Verzögerung die Nutzerendgeräte, insbesondere Smartphones, der Menschen in dem betroffenen Gebiet, die Warnnachrichten erhalten und die Nutzer entsprechend warnen können.

Die Begriffe verteilter Zufall, common randomness, Zufallsbits, Zufallsschlüssel oder Seed wurden gegebenenfalls "nebeneinander" an einigen Stellen der Anmeldung verwendet. Diese verschiedenen Begriffe sind für die vorliegende als technische synonym zu betrachten. Die vorwiegende Nutzung des Begriffes Seed resultiert darauf, dass dieser im Hashing gebräuchlich ist und eine Verwechslungsgefahr mit anderen Konzepten verringert.

Wie schon verstehend beschrieben, die Sensoren und/oder die Warngeräte können Warnnachrichten weiterleiten können und sind auch in der Lage Warnnachrichten zusammenzufassen. Beispielsweise kann ein Warngerät auf diese Weise ein Warngebiet, welches von mehreren Sensoren überwacht wird, zusammenfassen.

Bei einer zentralen Verteilung der Seeds kann das Problem auftreten, dass das Nutzerendgerät noch die Information benötigt, welcher Seed aktuell verwendet wird, wenn das Nutzerendgerät aus effizienzgründen nicht die (alle) ihm bekanntgemachten Seeds solange durchprobieren möchte bis eine erfolgreiche Identifikation vorliegt. Eine Teilmenge von Seeds könnte z.B. einem gewissen Zeitfenster zugeordnet werden, was die Anzahl der zu probierenden Seeds einschränken würde oder es könnte eine Synchronisation durchgeführt werden. Es ist auch möglich den "einzelnen" Seed von 6 Bit mit der Nachricht mitzusenden.

## Patentansprüche

1. Verfahren zum Warnen vor Gefahrensituationen in einem Gebiet mittels eines Kommunikationssystems, umfassend die folgenden Schritte:
• (205) Bereitstellen einer Mehrzahl von Sensoren (110) in dem Gebiet;
• (210) Messen von einem Umgebungsparameter durch die Sensoren in dem Gebiet, wobei der Umgebungsparameter geeignet ist eine Gefahrensituation zu charakterisieren;
• (215) Absenden von Warnnachrichten durch die Sensoren, wobei die Warnnachrichten als Post-Shannon Nachrichten ausgebildet sind, wobei eine Post-Shannon Nachricht in einem zu übertragenden Identifizierungscode kodiert ist, der charakteristische Kennzeichnungsmerkmale der Nachricht aufweist, die es einem Empfänger ermöglichen, anhand lokal vorliegender Daten zu prüfen, ob ihm die vollständige Nachricht bereits vorliegt, sodass der Empfänger die Nachricht durch Identifikation als empfangen erkennen kann,
wobei der Identifizierungscode ein deterministischer Identifizierungscode oder ein randomisierter Identifizierungscode ist, der einem Nutzerendgerät beim Eintritt in das Gebiet bereitgestellt wird.

2. Verfahren nach Anspruch 1, wobei die Sensoren (110) die Warnnachrichten an ein Warngerät, eine Basisstation (120) und/oder an zumindest ein Nutzerendgerät (150) senden.

3. Verfahren nach Anspruch 2, wobei die Basisstation (120) die Warnnachrichten über ein mobiles Kommunikationsnetzwerk, insbesondere ein 5G oder 6G Kommunikationsnetzwerk, an Nutzerendgeräte (150) weiterleitet.

4. Verfahren nach Anspruch 3, wobei das mobile Kommunikationsnetzwerk eine logische getrennte Slice für die Warnnachrichten reserviert.

5. Verfahren nach einem der vorherigen Ansprüche, wobei eine Mehrzahl von Sensoren ein Peer-to-Peer Netzwerk zum Weiterleiten der Warnnachrichten ausbilden.

6. Verfahren nach einem der vorherigen Ansprüche, wobei ein Autorisierungsverfahren verwendet wird und wobei nur die Warnnachrichten von autorisierten Sensoren und/oder autorisierten Warngeräten weitergeleitet werden.

7. Verfahren nach einem der vorherigen Ansprüche, wobei der Identifizierungscode in einen Ringspeicher des Nutzerendgerätes (150) übertragen wird.

8. Verfahren nach Anspruch 7, wobei der deterministische Identifizierungscode, der randomisierter Identifizierungscode und/oder ein Seed je nach Gebiet und/oder je nach Gefahrenquelle verschiedenartig ist.

9. Verfahren nach Anspruch 8, wobei ein Seed des randomisierten Identifizierungscodes, eine Hash-Funktion des randomisierten Identifizierungscodes und/oder der deterministische Identifizierungscode jeweils an den zumindest einen Sensor, das zumindest eine Warngerät und/oder das zumindest eine Nutzerendgerät bereitgestellt wird.

10. Verfahren nach einem der vorherigen Ansprüche, wobei der Identifizierungscode zu Zeiten niedrige Netzwerkauslastung verteilt wird.

11. Verfahren nach einem der vorherigen Ansprüche, wobei der Identifizierungscode zu einer Informationsnachricht gemapped wird.

12. Verfahren nach einem der Ansprüche 2 bis 11, wobei die Sensoren und das Warngerät ein erstes Kommunikationsteilsystem ausbilden und das zumindest eine Warngerät und die Nutzerendgeräte ein zweites Teilsystem ausbilden, wobei die folgenden Schritte ausgeführt werden:
• Bereitstellen eines ersten Seeds an das erste Teilsystem und Bereitstellen eines zweiten Seeds an das zweite Teilsystem;
• Senden der Warnnachricht innerhalb des ersten Teilsystems als Post-Shannon Nachricht und Weiterleiten der Warnnachricht innerhalb des zweiten Teilsystems an die Nutzerendgeräte als Post-Shannon Nachricht.

13. Verfahren nach einem der Ansprüche 2 bis 11, wobei die Sensoren und das Warngerät ein erstes Kommunikationsteilsystem ausbilden und das zumindest eine Warngerät und die Nutzerendgeräte ein zweites Teilsystem ausbilden, wobei die folgenden Schritte ausgeführt werden:
• Bereitstellen eines ersten Seeds an das erste Teilsystem;
• Senden der zumindest einen Warnnachricht innerhalb des ersten Teilsystems als Post-Shannon Nachricht Post und Weiterleiten der Warnnachricht innerhalb des zweiten Teilsystems an die Nutzerendgeräte als non-Post-Shannon Nachricht.

14. Sensor zum Warnen vor Gefahrensituationen in einem Gebiet aufweisend ein Messmodul zum Messen von zumindest einem Umgebungsparameter, wobei bei der Umgebungsparameter geeignet ist eine Gefahrensituation zu charakterisieren;
ein Sensor-Rechnermodul, wobei das Sensor-Rechnermodul eingerichtet ist eine Warnnachricht für das Gebiet als eine Post-Shannon Nachricht zu erzeugen, wobei das Sensor-Rechnermodul ferner eingerichtet ist einen Identifizierungscode, der charakteristische Kennzeichnungsmerkmale der Nachricht aufweist, abzuspeichern und basierend auf dem Identifizierungscode die Post-Shannon Nachricht zu kodieren;
ein Sensor-Sende-Modul, das eingerichtet ist die als Identifizierungscode kodierte Post-Shannon Warnnachricht zu versenden, wobei der Identifizierungscode es einem Empfänger ermöglicht, anhand lokal vorliegender Daten zu prüfen, ob ihm die vollständige Nachricht bereits vorliegt, sodass der Empfänger die Nachricht durch Identifikation als empfangen erkennen kann,
wobei der Identifizierungscode ein deterministischer Identifizierungscode oder ein randomisierter Identifizierungscode ist, der einem Nutzerendgerät beim Eintritt in das Gebiet bereitgestellt wird.

15. Nutzerendgerät zum Empfangen von Warnnachrichten in einem Gebiet aufweisend
- ein Nutzerendgerät-Empfangsmodul eingerichtet zum Empfangen eines Identifizierungscodes beim Eintritt in das Gebiet, wobei der Identifizierungscode ein deterministischer Identifizierungscode oder ein randomisierter Identifizierungscode ist;
- das Nutzerendgerät-Empfangsmodul ferner eingerichtet zum Empfangen einer als Identifizierungscode kodierten Post-Shannon Warnnachricht;
- ein Nutzerendgerät-Rechnermodul eingerichtet zum Abspeichern des Identifizierungscodes und um die kodierte Post-Shannon Warnnachrichten auf Basis des Identifizierungscodes zu identifizieren,
wobei eine Warnmeldung an den Nutzer ausgegeben wird, wenn eine Warnung für das Gebiet festgestellt wird.

## Claims

1. Method for warning of hazardous situations in an area by means of a communication system, comprising the following steps:
• (205) providing a plurality of sensors (110) in the area;
• (210) measuring an environmental parameter by the sensors in the area, wherein the environmental parameter is suitable for characterizing a hazardous situation;
• (215) sending warning messages by the sensors, wherein the warning messages are configured as Post-Shannon messages, wherein a Post-Shannon message is encoded in an identification code that is to be transmitted, which has characteristic identifying features of the message, which enable a recipient, on the basis of locally available data, to check whether the complete message is already available to it, so that the recipient can recognize the message as received by identification,
wherein the identification code is a deterministic identification code or a randomized identification code, which is provided to a user terminal upon entry into the area.

2. Method according to claim 1, wherein the sensors (110) send the warning messages to a warning device, a base station (120) and/or to at least one user device (150).

3. Method according to claim 2, wherein the base station (120) relays the warning messages to user devices (150) via a mobile communication network, in particular a 5G or 6G communication network.

4. Method according to claim 3, wherein the mobile communication network reserves a logically separate slice for the warning messages.

5. Method according to one of the preceding claims, wherein a plurality of sensors form a peer-to-peer network for relaying the warning messages.

6. Method according to one of the preceding claims, wherein an authorization method is used and wherein only the warning messages from authorized sensors and/or authorized warning devices are relayed.

7. Method according to one of the preceding claims, wherein the identification code is transferred into a ring storage of the user device (150).

8. Method according to claim 7, wherein the deterministic identification code, the randomized identification code and/or a seed are different depending on the area and/or depending on the hazard source.

9. Method according to claim 8, wherein a seed of the randomized identification code, a hash function of the randomized identification code and/or the deterministic identification code are each provided to the at least one sensor, the at least one warning device and/or the at least one user device.

10. Method according to one of the preceding claims, wherein the identification code is distributed at times of low network load.

11. Method according to one of the preceding claims, wherein the identification code is mapped to an information message.

12. Method according to one of claims 2 to 11, wherein the sensors and the warning device form a first communication subsystem and the at least one warning device and the user devices form a second subsystem, wherein the following steps are carried out:
• providing a first seed to the first subsystem and providing a second seed to the second subsystem;
• sending the warning message within the first subsystem as a Post-Shannon message and relaying the warning message within the second subsystem to the user devices as a Post-Shannon message.

13. Method according to one of claims 2 to 11, wherein the sensors and the warning device form a first communication subsystem and the at least one warning device and the user devices form a second subsystem, wherein the following steps are carried out:
• providing a first seed to the first subsystem;
• sending the at least one warning message within the first subsystem as a Post-Shannon message Post and relaying the warning message within the second subsystem to the user devices as a non-Post-Shannon message.

14. Sensor for warning of hazardous situations in an area, comprising
a measurement module for measuring at least one environmental parameter, wherein the environmental parameter is suitable for characterizing a hazardous situation;
a sensor computing module, wherein the sensor computing module is configured to generate a warning message for the area as a Post-Shannon message, wherein the sensor computing module is further configured to store an identification code, which has characteristic identifying features of the message, and to encode the Post-Shannon message based on the identification code;
a sensor transmission module, which is configured to transmit the Post-Shannon warning message encoded as an identification code, wherein the identification code enables a recipient, on the basis of locally available data, to check whether the complete message is already available to it, so that the recipient can recognize the message as received by identification,
wherein the identification code is a deterministic identification code or a randomized identification code, which is provided to a user device upon entry into the area.

15. User device for receiving warning messages in an area, comprising
- a user device reception module configured to receive an identification code upon entry into the area, wherein the identification code is a deterministic identification code or a randomized identification code;
- the user device reception module further configured to receive a Post-Shannon warning message encoded as an identification code;
- a user device computing module configured to store the identification code and to identify the encoded Post-Shannon warning messages on the basis of the identification code,
wherein a warning notification is output to the user when a warning for the area is detected.

## Revendications

1. Procédé pour avertir de situations dangereuses dans une zone au moyen d'un système de communication, comprenant les étapes suivantes :
• (205) fourniture d'une pluralité de capteurs (110) dans la zone ;
• (210) mesure d'un paramètre d'environnement par les capteurs dans la zone, le paramètre d'environnement étant approprié pour caractériser une situation dangereuse ;
• (215) envoi de messages d'avertissement par les capteurs, les messages d'avertissement se présentant sous la forme de messages post-Shannon, un message post-Shannon étant encodé dans un code d'identification à transmettre présentant des caractéristiques d'identification caractéristiques du message, qui permettent à un destinataire de vérifier, sur la base de données disponibles localement, si le message complet lui est déjà disponible, de sorte que le destinataire peut, par identification, reconnaître le message comme étant reçu,
le code d'identification étant un code d'identification déterministe ou un code d'identification randomisé fourni à un terminal utilisateur lors de l'entrée dans la zone.

2. Procédé selon la revendication 1, dans lequel les capteurs (110) envoient les messages d'avertissement à un appareil d'avertissement, à une station de base (120) et/ou à au moins un terminal utilisateur (150).

3. Procédé selon la revendication 2, dans lequel la station de base (120) transmet les messages d'avertissement à des terminaux utilisateurs (150) par l'intermédiaire d'un réseau de communication mobile, en particulier un réseau de communication 5G ou 6G.

4. Procédé selon la revendication 3, dans lequel le réseau de communication mobile réserve une tranche logique distincte pour les messages d'avertissement.

5. Procédé selon l'une des revendications précédentes, dans lequel une pluralité de capteurs forment un réseau de poste à poste pour transmettre les messages d'avertissement.

6. Procédé selon l'une des revendications précédentes, dans lequel un procédé d'autorisation est utilisé et dans lequel seuls les messages d'avertissement provenant de capteurs autorisés et/ou d'appareils d'avertissement autorisés sont transmis.

7. Procédé selon l'une des revendications précédentes, dans lequel le code d'identification est transmis dans une mémoire circulaire du terminal utilisateur (150).

8. Procédé selon la revendication 7, dans lequel le code d'identification déterministe, le code d'identification randomisé et/ou un germe est de type différent selon la zone et/ou selon la source de danger.

9. Procédé selon la revendication 8, dans lequel un germe du code d'identification randomisé, une fonction de hachage du code d'identification randomisé et/ou le code d'identification déterministe sont respectivement fournis à l'au moins un capteur, à l'au moins un appareil d'avertissement et/ou à l'au moins un terminal utilisateur.

10. Procédé selon l'une des revendications précédentes, dans lequel le code d'identification est distribué à des moments de faible charge du réseau.

11. Procédé selon l'une des revendications précédentes, dans lequel le code d'identification est mappé sur un message d'information.

12. Procédé selon l'une des revendications 2 à 11, dans lequel les capteurs et l'appareil d'avertissement forment un premier sous-système de communication et l'au moins un appareil d'avertissement et les terminaux utilisateurs forment un second sous-système, les étapes suivantes étant exécutées :
• fourniture d'un premier germe au premier sous-système et fourniture d'un second germe au second sous-système ;
• envoi du message d'avertissement au sein du premier sous-système sous la forme de message post-Shannon et transmission du message d'avertissement au sein du second sous-système aux terminaux utilisateurs sous la forme de message post-Shannon.

13. Procédé selon l'une des revendications 2 à 11, dans lequel les capteurs et l'appareil d'avertissement forment un premier sous-système de communication et l'au moins un appareil d'avertissement et les terminaux utilisateurs forment un second sous-système, les étapes suivantes étant exécutées :
• fourniture d'un premier germe au premier sous-système ;
• envoi de l'au moins un message d'avertissement au sein du premier sous-système sous la forme de message post-Shannon et transmission du message d'avertissement au sein du second sous-système aux terminaux utilisateurs sous la forme de message non post-Shannon.

14. Capteur pour avertir de situations dangereuses dans une zone, comportant un module de mesure pour mesurer au moins un paramètre d'environnement, le paramètre d'environnement étant approprié pour caractériser une situation dangereuse ;
un module calculateur de capteur, le module calculateur de capteur étant conçu pour générer un message d'avertissement pour la zone sous la forme d'un message post-Shannon, le module calculateur de capteur étant en outre conçu pour enregistrer un code d'identification présentant des caractéristiques d'identification caractéristiques du message et pour encoder le message post-Shannon sur la base du code d'identification ;
un module d'émission de capteur qui est conçu pour envoyer le message d'avertissement post-Shannon encodé sous la forme de code d'identification, le code d'identification permettant à un destinataire de vérifier, sur la base de données disponibles localement, si le message complet lui est déjà disponible, de sorte que le destinataire peut, par identification, reconnaître le message comme étant reçu,
le code d'identification étant un code d'identification déterministe ou un code d'identification randomisé fourni à un terminal utilisateur lors de l'entrée dans la zone.

15. Terminal utilisateur destiné à recevoir des messages d'avertissement dans une zone, comportant
- un module de réception de terminal utilisateur conçu pour recevoir un code d'identification lors de l'entrée dans la zone, le code d'identification étant un code d'identification déterministe ou un code d'identification randomisé ;
- le module de réception de terminal utilisateur étant en outre conçu pour recevoir un message d'avertissement post-Shannon encodé sous la forme de code d'identification ;
- un module calculateur de terminal utilisateur conçu pour enregistrer le code d'identification et pour identifier les messages d'avertissement post-Shannon encodés sur la base du code d'identification,
un message d'avertissement étant émis à l'attention de l'utilisateur lorsqu'un avertissement pour la zone est constaté.
